# EUROPEAN PATENT SPECIFICATION

(11) **EP 3 508 518 B1**
(45) Date of publication and mention of the grant of the patent: **20.07.2022**
(21) Application number: 17846365.9
(22) Date of filing: 25.08.2017
(51) Int. Cl.: C08J 5/04, B32B 27/12, B32B 5/02, B32B 7/02, B32B 27/28, B32B 27/32, B32B 27/34, B32B 27/36

(54) **LAMINATE AND METHOD FOR PRODUCING FIBER-REINFORCED RESIN COMPOSITE**
LAMINAT UND VERFAHREN ZUR HERSTELLUNG EINES FASERVERSTÄRKTEN HARZVERBUNDSTOFFES
STRATIFIÉ ET PROCÉDÉ DE PRODUCTION D'UN COMPOSITE DE RÉSINE RENFORCÉ PAR DES FIBRES

(30) Priority: 31.08.2016 JP 2016169303
(43) Date of publication of application: 10.07.2019
(73) Proprietor: Teijin Limited, Osaka-shi, Osaka 530-0005 (JP)
(72) Inventor: MIYAKE Toshiyuki, Osaka-shi Osaka 530-0005 (JP)
(74) Representative: Beckmann, Claus
(86) International application number: PCT/JP2017/030612
(87) International publication number: WO 2018/043360

(56) References cited:
- EP-A1- 1 125 728
- WO-A1-2006/073097
- WO-A1-2014/038722
- JP-A- H0 516 253
- JP-A- 2008 045 010
- JP-A- 2013 203 786
- JP-A- 2016 071 376
- DATABASE WPI Week 200819 Thomson Scientific, London, GB; AN 2008-C55923 XP002793129, & JP 2008 045010 A (TOHO TENAX CO LTD) 28 February 2008 (2008-02-28)
- AKIRA OKAMOTO: "Specialized Rayon Fibres and a Case of Modification", Journal of the Textile Machinery Society of Japan, vol. 47, no. 4, 1994, pages 147-151, XP055561252,

## Description

### TECHNICAL FIELD

The present invention relates to a laminate and, more specifically, to a laminate having excellent heat moldability and a process for producing a fiber-reinforced resin composite.

### BACKGROUND ART

A fiber-reinforced resin composite is used in a wide variety of fields such as automobiles, aircraft members and general industrial materials due to its lightweight and high physical properties. Various proposals have been made for a fiber-reinforced resin composite comprising a matrix resin and reinforcing fibers.

Patent Document 1 discloses a prepreg containing carbon fibers coated with a sizing agent and a thermoplastic resin. Patent Document 2 discloses a carbon fiber-reinforced composite molding comprising a carbon fiber base material and a polycarbonate resin as a matrix resin. Patent Document 3 discloses a fiber-reinforced composite material comprising a matrix resin and reinforcing fibers. Patent Document 4 discloses a fiber-matrix semi-manufactured product comprising a fiber material and a thermoplastic matrix containing a thermoplastic resin and phosphazene. Patent Document 5 discloses a prepreg comprising reinforcing fibers and a thermoplastic resin, in which a thermoplastic resin layer having air permeability is formed on continuous reinforcing fiber bundles.

Since surface appearance quality is required for these fiber-reinforced resin composites in addition to mechanical properties, the reinforcing fibers must be fully impregnated with a resin and the number of voids must be reduced.

However, a laminate before molding which is a pre-stage before it becomes the final fiber-reinforced resin composite is required to be formed into a complex shape. Especially when the resin is a thermoplastic resin, it becomes hard at normal temperature, thereby deteriorating in moldability. When the resin is impregnated in a solution form as importance is attached to impregnability, the resin becomes hard, thereby deteriorating in moldability.

Then, Patent Document 6 discloses a fiber-reinforced material composite sheet which is a composite sheet composed of a web containing long fiber bundles for reinforcement and single fiber-like thermoplastic polymer fibers, in which the thermoplastic polymer fibers enter and entangle with the long fibers constituting the web to be integrated with the long fibers. However, the thermoplastic polymer fibers used herein are ordinary solid fibers and many unimpregnated parts tend to remain in the final molding stage.

Patent Document 7 discloses a nonwoven fabric structure containing modified cross section fibers having bubbles therein. Patent Document 8 discloses a flame-retardant nonwoven fabric having one or more layers of a fibrous material prepared by kneading a non-halogen-based flame retardant into a mixture of a polyphenylene sulfide resin.

EP 1 125 728 A1 is aimed at providing FRP formed by integrating a fiber reinforcing material and a non-woven fabric, and having excellent shaping ability, impact resistance after molding, and excellent reliability and low cost. According to the document, this aim is achieved by a complex fiber reinforcing material including a sheet-shaped fiber reinforcing material composed of reinforcing fibers, and a non-woven fabric laminated on at least one side of the fiber reinforcing material, wherein the fibers constituting the non-woven fabric pass through the fiber reinforcing material to integrate the non-woven fabric with the fiber reinforcing material.

JP 2008 045010 A relates to the problem to provide a prepreg for obtaining a toughness-imparted composite material without deteriorating the excellent mechanical characteristics and thermal characteristics of a matrix resin, and to provide a method for producing the same. As a solution to the problem, the document describes a prepreg comprising reinforcing fibers and a matrix resin is characterized in that the matrix resin constituting the outer layer of the prepreg comprises a thermosetting resin, and the matrix resin constituting the inner layer of the prepreg contains hollow fibers. The volume rate (porosity) of the hollow portions of the hollow fibers to the total volume of the prepreg is in a range of 1 to 3 volume%, and the matrix resin constituting the inner layer preferably comprises a thermoplastic resin.

JP H05 16253 A relates to the problem to manufacture a novel FRP molding lighter than FRPs and having low density efficiently and economically by particularly using light-weight hollow fibers or combining hollow fibers and non-hollow reinforced fibers as reinforced fibers. As a solution to the problem, the document describes that hollow fibers having apparent density of 1.0g/cm³ or less are employed as reinforced fibers, or hollow fibers having apparent density of 1.0g/cm³ or less and non-hollow reinforced fibers having tensile strength of 100kg/mm² or more are used and molded into light-weight FRPs having density of 1.2g/cm³ or less by employing a resin. According to the document, it is favorable that a bar-shaped article, which employs fibers, which can be heated, foamed and expanded, and hollow fibers as a core material at that time and the outside of which is knitted by reinforced fibers, and a bar-shaped article (an intermediate blank), in which the bar-shaped article is impregnated with the resin, is manufactured, and the bar-shaped article is introduced into a mold, and heated and molded in the presence of the resin.

WO 2006/073097 A1 describes a fiber sheet having excellent flame retardance, and a formed article thereof. Specifically disclosed is a flame-retardant fiber sheet wherein fibers contain an ammonium polyphosphate having a polymerization degree of 10-40. The ammonium polyphosphate is insoluble or poorly soluble in water, and provides the fiber sheet with excellent flame retardance along with water resistance and durability. In addition the ammonium polyphosphate is available at low cost. Since an article formed of this flame-retardant fiber sheet has excellent flame retardance while being harmless to humans and animals, it is useful, for example, as an interior material for automobiles or buildings.

JP 2013/203786 A relates to the problem to reduce voids caused by insufficient impregnation of a resin to fibers, in a thermoplastic resin-impregnated fiber prepreg and a fiber-reinforced thermoplastic resin sheet. As a solution to the problem, the document describes that an inert gas is impregnated into a laminate before a step for heating and pressurizing the laminate comprising a fiber bundle and a thermoplastic resin, or at the same time with the step. Hot-stamping molding is carried out in an inert gas atmosphere when molding a thermoplastic resin-impregnated fiber prepreg by the hot-stamping molding.

JP 2016/071376 A relates to the problem to provide a fire-retardant sound absorber that is excellent in sound absorbency and fire retardancy and suppresses the falling of fire retardant particles contained therein. As a solution to the problem, the document describes a fire-retardant sound absorber which includes a middle layer and a surface layer provided on at least one surface of the middle layer, or includes a middle layer, a surface layer provided on one surface of the middle layer and a rubber layer provided on the other surface of the middle layer. The surface layer has a content of 10% by mass or less of fire retardant particles and is formed of a porous sheet having a fire retardancy of HF-1 or better as measured according to UL94. The middle layer is formed of an air-laid nonwoven fabric obtained by using fire retardant particles, a raw material fiber (a) containing 40% by mass or more of a fiber (α) having at least a hollow tubular shape and a crimp shape, and a thermal fusion fiber (b).

Akira Okamoto (Journal of the Textile Machinery Society of Japan, vol. 47, no. 4, pages 147-151) describes specialized rayon fibers and a case of modification.

### PRIOR ART DOCUMENTS

Patent Document 1: JP-A 2014-145038
Patent Document 2: JP-A 2016-8295
Patent Document 3: JP-A 2005-239939
Patent Document 4: JP-A 2016-98376
Patent Document 5: WO2003/091015
Patent Document 6: JP-A 3-47713
Patent Document 7: WO2014/038722
Patent Document 8: JP-A 2007-107108

### DISCLOSURE OF THE INVENTION

### Problem to Be Solved by the Invention

It is an object of the present invention to obtain a laminate which is easily processed and hardly produces unimpregnated parts at the time of molding and a process for producing a fiber-reinforced resin composite from the laminate.

### Means for Solving the Problem

The present invention is a laminate comprising a reinforcing fiber sheet (b) and a thermoplastic resin sheet (a), wherein (i) the reinforcing fiber sheet (b) comprises reinforcing fibers (B) having a melting temperature of not lower than 350°C and (ii) the thermoplastic resin sheet (a) is a nonwoven fabric containing hollow fibers which comprise a thermoplastic resin (A) having a melting temperature of lower than 350°C, wherein the thermoplastic resin sheet (a) is a nonwoven fabric containing hollow fibers which are arranged in a reticulate form and have an end face angle of smaller than 60° and wherein the hollow fiber has discontinuous bubbles therein. Preferably, the hollowness of the hollow fiber is not less than 5 %. Preferably, the thermoplastic resin (A) comprises an amorphous resin as the main component and incompatible components, the reinforcing fiber sheet (b) is a woven or knitted fabric, nonwoven fabric or unidirectional sheet, and the content of the reinforcing fibers (B) is not lower than 10 wt%.

A fiber-reinforced resin composite is obtained by pressure molding the laminate of any one of the above inventions under heating. Thus, the invention also provides the method according to claim 7. The fiber-reinforced resin composite can be produced through (i) the step of providing the above laminate and (ii) the step of pressing the above laminate at a temperature not lower than the melting temperature of the thermoplastic resin (A) and lower than the melting temperature of the reinforcing fibers (B).

### Effect of the Invention

The laminate of the present invention has an advantage that it is easily processed and rarely produces unimpregnated parts when a fiber-reinforced resin composite is molded from the laminate. The fiber-reinforced resin composite has a small number of unimpregnated parts of the thermoplastic resin and is excellent in mechanical strength such as flexural modulus and bending strength as well as flame retardancy. According to the process for producing the fiber-reinforced resin composite, the thermoplastic resin is easily impregnated into the reinforcing fibers, and a fiber-reinforced resin composite having a small number of unimpregnated parts and excellent mechanical strength such as flexural modulus and bending strength and excellent flame retardancy is obtained.

### BRIEF DESCRIPTION OF THE DRAWINGS

[Fig. 1] Fig. 1 is a sectional view of a hollow fiber used in the present invention.
[Fig. 2] Fig. 2 shows a method of measuring the modification degree of the present invention.

### PRATICAL EMBODIMENT OF THE INVENTION

### <laminate>

The laminate of the present invention includes a reinforcing fiber sheet (b) and a thermoplastic resin sheet (a), wherein (i) the reinforcing fiber sheet (b) contains reinforcing fibers (B) having a melting temperature of not lower than 350°C and (ii) the thermoplastic resin sheet (a) is a nonwoven fabric containing hollow fibers which contain a thermoplastic resin (A) having a melting temperature of lower than 350°C, wherein the thermoplastic resin sheet (a) is a nonwoven fabric containing hollow fibers which are arranged in a reticulate form, wherein the end face angle of the hollow fiber is smaller than 60°, and wherein the hollow fiber has discontinuous bubbles therein.

The laminate of the present invention can be formed into a fiber-reinforced resin composite which may be various in shape by molding such as pressing.

### (reinforcing fiber sheet (b))

The reinforcing fiber sheet (b) used in the laminate of the present invention contains reinforcing fibers (B).

The melting temperature of the reinforcing fibers (B) is not lower than 350°C. Stated more specifically, inorganic fibers such as carbon fibers, glass fibers and metal fibers and organic synthetic fibers such as aromatic polyamide fibers may be used. They may be used alone or in combination of two or more.

As the metal fibers, stainless fibers may be used and preferred in terms of conductivity and mechanical properties. A metal may be coated or deposited on the surfaces of the reinforcing fibers. For example, nickel-coated carbon fibers are preferred in terms of conductivity. Carbon fibers having high strength and high elastic modulus and glass fibers are particularly preferred. To obtain a laminate having high stiffness, polyacrylonitrile (PAN)-based, petroleum·coal pitch-based, rayon-based and lignin-based carbon fibers are preferred. PAN-based carbon fibers produced from PAN are particularly preferred as they have excellent industrial-scale productivity and mechanical properties.

The reinforcing fibers (B) used in the present invention should be fibrous and prolonged in one direction and include not only ordinary fibers and filaments but also so-called "whiskers".

Examples of the reinforcing fibers (B) which are preferably used include fibrous materials made from inorganic fillers such as glass fibers, glass fibers having a flat cross section, carbon fibers, metal fibers, asbestos, Rockwool, ceramic fibers, slag fibers, potassium titanate whiskers, boron whiskers, aluminum borate whiskers, calcium carbonate whiskers, titanium oxide whiskers, wollastonite, xonotlite, palygorskite (attapulgite) and sepiolite. Further, heat-resistant organic fibers typified by aramid fibers, polyimide fibers, PBO (polyparaphenylene benzoxazole) fibers and polybenzothiazole fibers are also included.

Fibers whose surface is coated with a different material such as a metal or metal oxide are further included. The fibers whose surface is coated with a different material should be fibrous, as exemplified by metal-coated glass fibers, metal-coated glass flakes, titanium oxide-coated glass flakes and metal-coated carbon fibers. The method of coating the surface with a different material is not particularly limited and may be known plating (for example, electroplating, electroless plating, melt plating), vacuum deposition, ion plating, CVD (for example, thermal CVD, MOCVD, plasma CVD), PVD or sputtering. Out of these reinforcing fibers, one selected from glass fibers, carbon fibers and aramid fibers is preferred. These reinforcing fibers may be used alone or in combination of two or more.

The content of the reinforcing fibers (B) in the laminate of the present invention is preferably 10 to 300 parts by weight, more preferably 50 to 200 parts by weight, much more preferably 80 to 150 parts by weight, most preferably 80 to 120 parts by weight based on 100 parts by weight of the laminate of the present invention or the finally obtained fiber-reinforced resin composite. When the content of the reinforcing fibers is lower than 10 parts by weight, strength is not fully developed and when the content is higher than 300 parts by weight, the reinforcing fibers are not fully impregnated with the thermoplastic resin, whereby strength may not be fully developed.

As for the thickness, so-called "fineness" of the reinforcing fibers (B), fibers having an average diameter of 3 to 20 µm are preferably used, and fibers having an average diameter of 5 to 15 µm are more preferably used. Within this range, the fibers have high physical properties and excellent dispersibility in the thermoplastic resin (A) which finally becomes a matrix. From the viewpoint of productivity, the reinforcing fibers are each preferably a fiber bundle of 1,000 to 50,000 filaments.

Preferably, the reinforcing fibers (B) used in the laminate of the present invention have high strength to reinforce the resin in the end, i.e., a tensile strength of 3,500 to 7,000 MPa and a modulus of 220 to 900 GPa. From the viewpoint of obtaining a molded article having high strength in the end, carbon fibers are particularly preferred and PAN-based carbon fibers are more preferred as the reinforcing fibers (B).

As for the form of the reinforcing fibers (B) existent in the laminate, the reinforcing fibers (B) may be either long fibers or short fibers. From the viewpoint of reinforcing the resin, long fibers are preferred and from the viewpoint of making the physical properties of the obtained composite isotropic, short fibers are preferably used as the main component. The term "short fibers" as used herein means discontinuous fibers which are not long fibers. When short fibers are used, the reinforcing fiber sheet (b) is preferably a fiber assembly or a nonwoven fabric in which fibers are oriented at random.

When short fibers (discontinuous fibers) are used as the reinforcing fibers (B), the length of each of the fibers is preferably not less than 300 µm, more preferably not less than 3 mm, much more preferably not less than 6 mm, most preferably not less than 20 mm. When short fibers are used, the length is preferably not more than 100 mm, more preferably not more than 80 mm, particularly preferably not more than 60 mm. When these fibers are used in the form of a nonwoven fabric, anisotropy against strength and size is improved.

When long fibers are used as the reinforcing fibers (B), they may be used in various forms such as a unidirectional sheet, woven fabric, knitted fabric and braid. From the viewpoint of the reinforcement of the strength of the finally obtained composite, it is preferred that they should be used in the form of a unidirectional sheet (so called "UD sheet") or some or all of the reinforcing fibers (B) should be used in the form of a unidirectional fiber sheet or unidirectional tape which is partially used. When long fibers are used, they are particularly preferably used in the form of a biaxial or triaxial woven fabric. One or a combination of two or more of these forms may be used partially.

### (thermoplastic resin sheet (a))

The laminate of the present invention is obtained by laminating together the reinforcing fiber sheet (b) composed of the above reinforcing fibers (B) and the thermoplastic resin sheet (a). The thermoplastic resin sheet (a) is a nonwoven fabric containing hollow fibers which contain a thermoplastic resin (A) having a melting temperature of lower than 350°C, wherein the thermoplastic resin sheet (a) is a nonwoven fabric containing hollow fibers which are arranged in a reticulate form, wherein the end face angle of the hollow fiber is smaller than 60°, and wherein the hollow fiber has discontinuous bubbles therein.

The thermoplastic resin (A) should be a thermoplastic resin which can melt to such an extent that it can be molded when the melting point falls within the range of the melting temperature of the thermoplastic resin as a matter of course and even when the melting point does not exist. The thermoplastic resin melts preferably at a temperature of 200 to 340°C, particularly preferably at a melting temperature or melting point of 220 to 320°C.

Examples of the thermoplastic resin (A) include polycarbonate-based resins, polyester-based resins, polystyrene-based resins, polyamide-based resins, polyphenylene sulfide-based resins, polyolefin-based resins and polyvinyl alcohol-based resins. Out of these, polycarbonate-based resins are preferred as they are excellent in dimensional stability.

More specifically stating the thermoplastic resin (A), a polyolefin-based resin may be arbitrarily selected from homopolymers such as polyethylene, polypropylene and polymethyl pentene and olefin-based copolymers.

The polyester-based resins include polyethylene terephthalate, polytrimethylene terephthalate, polybutylene terephthalate, polyethylene naphthalate, polylactic acid and copolyesters thereof.

Homopolymers and copolymers of two or more monomers obtained from starting materials such as styrene, acrylic acid ester, vinyl acetate, acrylonitrile and vinyl chloride are included. Polyamides such as nylon 6 and nylon 66 and copolymers thereof, polycarbonate, polyacetal, polyphenylene sulfide and polyurethanes are also included. They may be obtained from bio materials.

Out of these, polypropylene, polyethylene terephthalate, polybutylene terephthalate, polycarbonate, styrene-based resin, polyamide and polyphenylene sulfide are preferred. Polypropylene, polyethylene terephthalate, styrene-based resin, polybutylene terephthalate, polycarbonate, polyamide and polyphenylene sulfide are more preferred. Polypropylene, polycarbonate, polyamide and polyphenylene sulfide are much more preferred. Polycarbonate resin is particularly preferred. By using such a high-melting point resin, a high thermosetting temperature can be adopted at the time of molding the fiber-reinforced resin composite in the end, thereby greatly improving moldability.

Preferably, the thermoplastic resin (A) contains an amorphous resin as the main component. Examples of the amorphous resin include polycarbonate resin and polypropylene resin. Out of these, polycarbonate resin is excellent. For example, the resin constituting the thermoplastic resin sheet (a) is preferably a flame-resistant amorphous resin, particularly preferably a flame-retardant polycarbonate resin.

When a homopolymer such as polyethylene, polypropylene or polymethyl pentene or an olefin-based copolymer is used as the thermoplastic resin (A), excellent chemical resistance is obtained. When nylon-based resin is used, excellent toughness is obtained. When polyphenylene sulfide resin is used, excellent heat resistance and chemical resistance are obtained. When polyethylene terephthalate resin, polybutylene terephthalate resin, polyethylene naphthalate resin or liquid crystal polymer is used, excellent chemical resistance is obtained.

When polycarbonate resin is used as the thermoplastic resin (A), a copolycarbonate resin obtained by copolymerizing a polydiorganosiloxane component may be preferably used. By using the copolymer resin, the finally obtained fiber-reinforced resin composite becomes excellent in low-temperature impact resistance. The content of the siloxane component is preferably 0.5 to 12 wt%, more preferably 2 to 10 wt%, much more preferably 3 to 8 wt%. Within this range, low-temperature impact resistance can be enhanced.

The melt volume flow rate (to be referred to as "MVR" hereinafter) of the thermoplastic resin (A) is preferably 2 to 200 cm³/10 min, more preferably 3 to 100 cm³/10 min, particularly preferably 5 to 70 cm³/10 min when measured at 300°C under a load of 1.2 kg. When MVR is too low, flowability deteriorates and impregnability degrades. When MVR is too high, it may be difficult to mold the thermoplastic resin into a fibrous form.

A more detailed description is subsequently given of the polycarbonate-based resin which is most suitable as the thermoplastic resin (A). Examples of the polycarbonate-based resin which can be best used as the thermoplastic resin (A) include those obtained by reacting a dihydroxy compound with a carbonate precursor by interfacial polycondensation and melt transesterification methods, those obtained by polymerizing a carbonate prepolymer by a solid-phase transesterification method and those obtained by polymerizing a cyclic carbonate compound by a ring-opening polymerization method.

The dihydroxy component used herein should be a component which is used as the dihydroxy component of a polycarbonate, such as a bisphenol or aliphatic diol.

Examples of the bisphenol include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl)propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy-3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol and 1,3-bis(4-hydroxyphenyl)-5,7-dimethyladamantane.

Bisphenols containing a polyorganosiloxane block represented by the following general formula [1] may also be used.

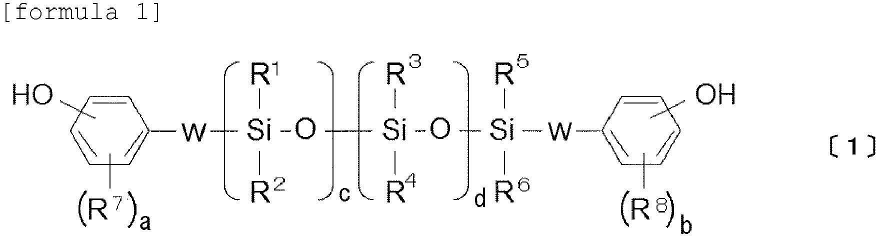

(In the above general formula [1], R¹, R², R³, R⁴, R⁵ and R⁶ are each independently a hydrogen atom, alkyl group having 1 to 12 carbon atoms, or substituted or nonsubstituted aryl group having 6 to 12 carbon atoms, R⁷ and R⁸ are each independently a hydrogen atom, halogen atom, alkyl group having 1 to 10 carbon atoms or alkoxy group having 1 to 10 carbon atoms, "a" and "b" are each independently a natural number of 1 to 4, "c" is a natural number, "d" is 0 or a natural number, and (c+d) is a natural number of 150 or less. W is a divalent aliphatic group having 2 to 8 carbon atoms.)

Examples of the aliphatic diol include 2,2-bis-(4-hydroxycyclohexyl)-propane, 1,14-tetradecanediol, octaethylene glycol, 1,16-hexadecanediol, 4,4'-bis(2-hydroxyethoxy)biphenyl, bis{(2-hydroxyethoxy)phenyl}methane, 1,1-bis{(2-hydroxyethoxy)phenyl}ethane, 1,1-bis{(2-hydroxyethoxy)phenyl}-1-phenylethane, 2,2-bis{(2-hydroxyethoxy)phenyl}propane, 2,2-bis{(2-hydroxyethoxy)-3-methylphenyl}propane, 1,1-bis{(2-hydroxyethoxy)phenyl}-3,3,5-trimethylcyclohexane, 2,2-bis{4-(2-hydroxyethoxy)-3,3'-biphenyl}propane, 2,2-bis{(2-hydroxyethoxy)-3-isopropylphenyl}propane, 2,2-bis{3-t-butyl-4-(2-hydroxyethoxy)phenyl}propane, 2,2-bis{(2-hydroxyethoxy)phenyl}butane, 2,2-bis{(2-hydroxyethoxy)phenyl}-4-methylpentane, 2,2-bis{(2-hydroxyethoxy)phenyl}octane, 1,1-bis{(2-hydroxyethoxy)phenyl}decane, 2,2-bis{3-bromo-4-(2-hydroxyethoxy)phenyl}propane, 2,2-bis{3,5-dimethyl-4-(2-hydroxyethoxy)phenyl}propane, 2,2-bis{3-cyclohexyl-4-(2-hydroxyethoxy)phenyl}propane, 1,1-bis{3-cyclohexyl-4-(2-hydroxyethoxy)phenyl}cyclohexane, bis{(2-hydroxyethoxy)phenyl}diphenylmethane, 9,9-bis{(2-hydroxyethoxy)phenyl}fluorene, 9,9-bis{4-(2-hydroxyethoxy)-3-methylphenyl}fluorene, 1,1-bis{(2-hydroxyethoxy)phenyl}cyclohexane, 1,1-bis{(2-hydroxyethoxy)phenyl}cyclopentane, 4,4'-bis(2-hydroxyethoxy)diphenyl ether, 4,4'-bis(2-hydroxyethoxy)-3,3'-dimethyldiphenyl ether, 1,3-bis[2-{(2-hydroxyethoxy)phenyl}propyl]benzene, 1,4-bis[2-{(2-hydroxyethoxy)phenyl}propyl]benzene, 1,4-bis{(2-hydroxyethoxy)phenyl}cyclohexane, 1,3-bis{(2-hydroxyethoxy)phenyl}cyclohexane, 4,8-bis{(2-hydroxyethoxy)phenyl}tricyclo[5.2.1.02,6]decane, 1,3-bis{(2-hydroxyethoxy)phenyl}-5,7-dimethyladamantane, 3,9-bis(2-hydroxy-1,1-dimethylethyl)-2,4,8,10-tetraoxaspiro(5,5)undecane, 1,4:3,6-dianhydro-D-sorbitol (isosorbide), 1,4:3,6-dianhydro-D-mannitol (isomannide) and 1,4:3,6-dianhydro-L-iditol (isoidide).

Out of these, aromatic bisphenols are preferred, and 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene and 1,4-bis{2-(4-hydroxyphenyl)propyl}benzene are more preferred. 2,2-bis(4-hydroxyphenyl)propane, 1,1-bis(4-hydroxyphenyl)cyclohexane, 4,4'-sulfonyldiphenol, 9,9-bis(4-hydroxy-3-methylphenyl)fluorene and bisphenols containing a polyorganosiloxane block represented by the above general formula [1] are particularly preferred. 2,2-bis(4-hydroxyphenyl)propane having high strength and high durability is most preferred. They may be used alone or in combination of two or more.

Further, preferably, the thermoplastic resin sheet (a) which is preferably used in the present invention contains incompatible components in addition to the above thermoplastic resin (A). When functional components are existent in an incompatible state in the resin sheet, various effects can be actualized in the laminate of the present invention.

For example, a flame retardant such as resorcinol bis(dixylenyl phosphate), cyclic phenoxy phosphazene or potassium salt of perfluorobutanesulfonic acid is preferably added to the thermoplastic resin (A). Further, a combination of a flame-retardant polycarbonate resin and one of the above flame retardants is particularly preferred. It is preferred to add a component having fibril forming ability, for example, polytetrafluoroethylene as an auxiliary to the thermoplastic resin (A). This polytetrafluoroethylene is also useful as a flame retarding aid.

Further, preferred additives are listed below. As an impact resistance modifier, a core-shell graft copolymer is preferred. As a compatibilizer for thermoplastic resins, a styrene-ethylene-propylene-styrene block copolymer is particularly preferred. To improve the slidability of the final member, polytetrafluoroethylene resin is preferably used. To improve relesability from a mold after pressing, a polyolefin-based release agent or saturated fatty acid ester-based release agent is preferably used.

To improve adhesion between the reinforcing carbon fibers and the thermoplastic resin which will become a matrix, bisphenol A type phenoxy resin and acid-modified olefin wax which is a copolymer of maleic anhydride and an α-olefin are preferably used.

To improve the weatherability of the finally obtained product, benzotriazole-based ultraviolet absorbents and stabilizers are preferably used. As stabilizers, stearyl 3-(3,5-di-tert-butyl-4-hydroxyphenyl)propionate which is known as Irganox, tris(2,4-di-tert-butylphenyl)phosphite and trimethyl phosphate (TMP) are preferably used. As colorants, white titanium dioxide, black carbon black and pigments are preferably used.

As the resin used in the thermoplastic resin sheet (a), a mixture of two or more thermoplastic resins (A) may be used as long as it has fiber forming property. A copolymer resin comprising a polycarbonate-based resin as the main component is particularly preferred as the thermoplastic resin (A). The laminate of the present invention contains various additives described above therein in addition to the thermoplastic resin (A) and the reinforcing fibers (B) and preferably further contains additives listed below.

### (other additives)

Various additives which are used to improve heat stability, optical stability (ultraviolet stability), flame retardancy and design may be used in the thermoplastic resin sheet (a). A detailed description is subsequently given of these additives though it is overlapped with the above description.

### (I) Heat stabilizer

The thermoplastic resin sheet (a) may contain various known stabilizers. The stabilizers include (i) phosphorus-based stabilizers and (ii) hindered phenol-based antioxidants.

### (i) Phosphorus-based stabilizer

Preferably, the thermoplastic resin sheet (a) contains a phosphorus-based stabilizer as long as its hydrolyzability is not promoted. The phosphorus-based stabilizer improves heat stability at the time of production or molding as well as mechanical properties, hue and molding stability.

The phosphorus-based stabilizer is selected from phosphorous acid, phosphoric acid, phosphonous acid, phosphonic acid and esters thereof, and a tertiary phosphine.

Examples of the phosphite compound include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-tert-butylphenyl)octyl phosphite, tris(diethylphenyl)phosphite, tris(di-isopropylphenyl)phosphite, tris(di-n-butylphenyl)phosphite, tris(2,4-di-tert-butylphenyl)phosphite, tris(2,6-di-tert-butylphenyl)phosphite, distearyl pentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, phenyl bisphenol A pentaerythritol diphosphite, bis(nonylphenyl)pentaerythritol diphosphite and dicyclohexyl pentaerythritol diphosphite.

Other phosphite compounds which react with a dihydric phenol and have a cyclic structure may also be used. The phosphite compounds include 2,2'-methylenebis(4,6-di-tert-butylphenyl)(2,4-di-tert-butylphenyl)phosphite, 2,2'-methylenebis(4,6-di-tert-butylphenyl) (2-tert-butyl-4-methylphenyl)phosphite, 2,2'-methylenebis(4-methyl-6-tert-butylphenyl)(2-tert-butyl-4-methylphenyl)phosphite and 2,2'-ethylidenebis(4-methyl-6-tert-butylphenyl) (2-tert-butyl-4-methylphenyl)phosphite.

Examples of the phosphate compound include tributyl phosphate, trimethyl phosphate, tricresyl phosphate, triphenyl phosphate, trichlorophenyl phosphate, triethyl phosphate, diphenylcresyl phosphate, diphenylmonoorthoxenyl phosphate, tributoxyethyl phosphate, dibutyl phosphate, dioctyl phosphate and diisopropyl phosphate. Out of these, triphenyl phosphate and trimethyl phosphate are preferred.

Examples of the phosphonite compound include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite.

Tetrakis(di-tert-butylphenyl)-biphenylene diphosphonites and bis(di-tert-butylphenyl)-phenyl-phenyl phosphonites are preferred. Tetrakis(2,4-di-tert-butylphenyl)-biphenylene diphosphonites and bis(2,4-di-tert-butylphenyl)-phenyl-phenyl phosphonites are more preferred. The phosphonite compound may be and is preferably used in combination with the above phosphite compound having an aryl group substituted for two or more alkyl groups.

Examples of the phosphonate compound include dimethylbenzene phosphonate, diethylbenzene phosphonate and dipropylbenzene phosphonate.

Examples of the tertiary phosphine include triethyl phosphine, tripropyl phosphine, tributyl phosphine, trioctyl phosphine, triamyl phosphine, dimethylphenyl phosphine, dibutylphenyl phosphine, diphenylmethyl phosphine, diphenyloctyl phosphine, triphenyl phosphine, tri-p-tolyl phosphine, trinaphthyl phosphine and diphenylbenzyl phosphine. Triphenyl phosphine is particularly preferred as the tertiary phosphine.

The above phosphorus-based stabilizers may be used alone or in combination of two or more. Out of these phosphorus-based stabilizers, alkyl phosphate compounds typified by trimethyl phosphate are preferably used. A combination of an alkylphosphate compound and a phosphite compound and/or a phosphonite compound is also preferred.

### (ii) Hindered phenol-based stabilizer

The thermoplastic resin sheet (a) may further contain a hindered phenol-based stabilizer. The hindered phenol-based stabilizer has the effect of suppressing the deterioration of hue at the time of molding or during long-time use.

Examples of the hindered phenol-based stabilizer include α-tocopherol, butylhydroxytoluene, sinapyl alcohol, vitamin E, n-octadecyl-β-(4'-hydroxy-3',5'-di-tert-butylphenyl)propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl)phenol, 3,5-di-tert-butyl-4-hydroxybenzylphosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-a-methylbenzyl-p-cresol), 2,2'-ethylidene-bis(4,6-di-tertbutylphenol), 2,2'-butylidene-bis(4-methyl-6-tertbutylphenol), 4,4'-butylidene-bis(3-methyl-6-tertbutylphenol), triethylene glycol-N-bis-3-(3-tert-butyl-4-hydroxy-5-methylphenyl)propionate, 1,6-hexanediol-bis[3-(3,5-di-tert-butyl-4-hydroxyphenyl)propionate], bis[2-tert-butyl-4-methyl6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1-dimethylethyl}-2,4,8,10-tetraoxaspiro[5,5]undecane, 4,4'-thiobis(6-tert-butyl-m-cresol), 4,4'-thiobis(3-methyl-6-tertbutylphenol), 2,2'-thiobis(4-methyl-6-tert-butylphenol), bis(3,5-di-tert-butyl-4-hydroxybenzyl)sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N'-hexamethylenebis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris-2[3(3,5-di-tert-butyl-4-hydroxyphenyl)propionyloxy]ethyl isocyanurate and tetrakis[methylene-3-(3',5'-di-tert-butyl-4-hydroxyphenyl)propionate]methane. All of these are easily obtained.

The above hindered phenol-based stabilizers may be used alone or in combination of two or more. The contents of the phosphorus-based stabilizer and the hindered phenol-based stabilizer are each preferably 0.0001 to 1 part by weight, more preferably 0.001 to 0.5 part by weight, much more preferably 0.005 to 0.3 part by weight based on 100 parts by weight of the thermoplastic resin (A).

### (iii) Heat stabilizer other than the above stabilizers

The thermoplastic resin sheet (a) may contain a heat stabilizer other than the above phosphorus-based stabilizer and the hindered phenol-based stabilizer. A preferred example of the heat stabilizer is a lactone-based stabilizer typified by a reaction product of 3-hydroxy-5,7-di-tert-butyl-furan-2-one and o-xylene.

This stabilizer is detailed in JP-A 7-233160. This compound is marketed under the name of Irganox HP-136 (trademark, manufactured by CIBA SPECIALTY CHEMICALS INC.) and may be used. A stabilizer prepared by mixing together the above compound, a phosphite compound and a hindered phenol compound is commercially available. A preferred example of this stabilizer is the Irganox HP-2921 of CIBA SPECIALTY CHEMICALS INC. The content of the lactone-based stabilizer is preferably 0.0005 to 0.05 part by weight, more preferably 0.001 to 0.03 part by weight based on 100 parts by weight of the thermoplastic resin (A).

Other stabilizers include sulfur-containing stabilizers such as pentaerythritol tetrakis(3-mercaptopropionate), pentaerythritol tetrakis(3-laurylthiopropionate) and glycerol-3-stearyl thiopropionate. The content of the sulfur-containing stabilizer is preferably 0.001 to 0.1 part by weight, more preferably 0.01 to 0.08 part by weight based on 100 parts by weight of the thermoplastic resin (A).

The thermoplastic resin sheet (a) may contain an epoxy compound as required. The epoxy compound is used to suppress the corrosion of a metal mold, and all epoxy compounds having an epoxy functional group may be basically used.

Preferred examples of the epoxy compound include 3,4-epoxycyclohexylmethyl-3',4'-epoxycyclohexyl carboxylate, 1,2-epoxy-4-(2-oxiranyl)cyclohexane adduct of 2,2-bis(hydroxymethyl)-1-butanol, copolymer of methyl methacrylate and glycidyl methacrylate, and copolymer of styrene and glycidyl methacrylate.

The content of the epoxy compound is preferably 0.003 to 0.2 part by weight, more preferably 0.004 to 0.15 part by weight, much more preferably 0.005 to 0.1 part by weight based on 100 parts by weight of the thermoplastic resin (A).

### (II) Ultraviolet absorbent

The thermoplastic resin sheet (a) may contain an ultraviolet absorbent to provide light resistance.

Examples of a benzophenone-based ultraviolet absorbent include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone and 2-hydroxy-4-methoxy-2'-carboxybenzophenone.

Examples of a benzotriazole-based ultraviolet absorbent include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one) and 2-[2-hydroxy-3-(3,4,5,6-tetrahydrophthalimidomethyl)-5-methylphenyl]benzotriazole.

Polymers having a 2-hydroxyphenyl-2H-benzotriazole skeleton such as a copolymer of 2-(2'-hydroxy-5-methacryloxyethylphenyl)-2H-benzotriazole and a vinyl-based monomer copolymerizable with that monomer and a copolymer of 2-(2'-hydroxy-5-acryloxyethylphenyl)-2H-benzotriazole and a vinyl-based monomer copolymerizable with that monomer are also included.

Examples of a hydroxyphenyltriazine-based ultraviolet absorbent include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol and 2-(4,6-diphenyl-1,3,5-triazin-2-yl)-5-butyloxyphenol. Further, compounds having a 2,4-dimethylphenyl group in place of the phenyl groups of the above compounds, such as 2-(4,6-bis(2,4-dimethylphenyl)-1,3,5-triazin-2-yl)-5-hexyloxyphenol, are also included.

Examples of a cyclic iminoester-based ultraviolet absorbent include 2,2'-p-phenylenebis(3,1-benzoxazin-4-one), 2,2'-m-phenylenebis(3,1-benzoxazin-4-one) and 2,2'-p,p'-diphenylenebis(3,1-benzoxazin-4-one).

Examples of a cyanoacrylate-based ultraviolet absorbent include 1,3-bis[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

The above ultraviolet absorbents may be each a polymer type ultraviolet absorbent obtained by copolymerizing an ultraviolet absorbing monomer and/or an optically stable monomer which has the structure of a monomer compound able to be radically polymerized with a monomer such as an alkyl (meth)acrylate. Preferred examples of the above ultraviolet absorbing monomer include compounds having a benzotriazole skeleton, a benzophenone skeleton, a triazine skeleton, a cyclic iminoester skeleton or a cyanoacrylate skeleton in the ester substituent of a (meth)acrylic acid ester. Out of these, benzotriazole-based and hydroxyphenyltriazine-based compounds are preferred from the viewpoint of ultraviolet absorbability. Cyclic imionoester-based and cyanoacrylate-based compounds are preferred from the viewpoints of heat resistance and hue. An example of the above ultraviolet absorbent is the KEMISORB 79 of Chemipro Kasei Kaisha, Ltd. The above ultraviolet absorbents may be used alone or in combination of two or more.

The content of the ultraviolet absorbent is preferably 0.01 to 2 parts by weight, more preferably 0.02 to 2 parts by weight, much more preferably 0.03 to 1 part by weight, particularly preferably 0.05 to 0.5 part by weight based on 100 parts by weight of the thermoplastic resin (A).

### (III) Flame retardant

The thermoplastic resin sheet (a) may contain a compound which is known as a flame retardant. Although flame retardancy is improved by mixing this compound, antistatic properties, flowability, stiffness and heat stability are also improved based on the properties of the compound.

Examples of the flame retardant include (i) organic metal salt-based flame retardants (such as organic sulfonic acid alkali (earth) metal salts, organic boric acid metal salt-based flame retardants and organic stannic acid metal salt-based compounds), (ii) organic phosphorus-based flame retardants (such as organic group-containing monophosphate compounds, phosphate oligomer compounds, phosphonate oligomer compounds, phosphonitrile oligomer compounds and phosphonic acid amide compounds), (iii) silicone-based flame retardants comprising a silicone compound and (iv) fibrillated PTFE. Out of these, organic metal salt-based flame retardants and organic phosphorus-based flame retardants are preferred. They may be used alone or in combination of two.

### (i) Organic metal salt-based flame retardant

The organic metal salt compound is an alkali (earth) metal salt of an organic acid having 1 to 50 carbon atoms, preferably 1 to 40 carbon atoms, preferably an alkali metal salt of an organic sulfonic acid. Examples of the alkali (earth) metal salt of an organic sulfonic acid include metal salts of a fluorine-substituted alkyl sulfonic acid such as metal salts of a perfluoroalkyl sulfonic acid having 1 to 10 carbon atoms, preferably 2 to 8 carbon atoms and an alkali metal or alkali earth metal, and metal salts of an aromatic sulfonic acid having 7 to 50 carbon atoms, preferably 7 to 40 carbon atoms and an alkali metal or alkali earth metal. Examples of the alkali metal constituting the metal salt include lithium, sodium, potassium, rubidium and cesium, and examples of the alkali earth metal include beryllium, magnesium, calcium, strontium and barium.

The metal salt is preferably an alkali metal salt. Out of these alkali metals, rubidium and cesium having a larger ion radius are preferred when the requirement for transparency is higher. However, as they cannot be used for all purposes and it is difficult to refine them, they may become disadvantageous in terms of cost.

Meanwhile, metals having a smaller ion radius such as lithium and sodium may become disadvantageous in terms of flame retardancy. In consideration of these, an alkali metal contained in the sulfonic acid alkali metal salt may be selected but a sulfonic acid potassium salt having good balance among properties is most preferred in all aspects. This potassium salt and a sulfonic acid alkali metal salt comprising another alkali metal may be used in combination.

Examples of the alkali metal salt of a perfluoroalkylsulfonic acid include potassium trifluoromethanesulfonate, potassium perfluorobutanesulfonate, potassium perfluorohexanesulfonate, potassium perfluorooctanesulfonate, sodium pentafluoroethanesulfonate, sodium perfluorobutanesulfonate, sodium perfluorooctanesulfonate, lithium trifluoromethanesulfonate, lithium perfluorobutanesulfonate, lithium perfluoroheptanesulfonate, cesium trifluoromethanesulfonate, cesium perfluorobutanesulfonate, cesium perfluorooctanesulfonate, cesium perfluorohexanesulfonate, rubidium perfluorobutanesulfonate and rubidium perfluorohexanesulfonate. They may be used alone or in combination of two or more. The number of carbon atoms of the perfluoroalkyl group is preferably 1 to 18, more preferably 1 to 10, much more preferably 1 to 8.

Out of these, potassium perfluorobutanesulfonate is particularly preferred. In general, a fluoride ion (F⁻) is contained in the alkali (earth) metal salt of a perfluoroalkylsulfonic acid comprising an alkali metal in no small measure. Since the existence of the fluoride ion may cause the deterioration of flame retardancy, it is preferably reduced as much as possible. The content of the fluoride ion can be measured by ion chromatography. The content of the fluoride ion is preferably not more than 100 ppm, more preferably not more than 40 ppm, particularly preferably not more than 10 ppm. It is advantageously not less than 0.2 ppm from the viewpoint of production efficiency.

The alkali (earth) metal salt of a perfluoroalkylsulfonic acid whose fluoride ion content has been reduced can be produced by a known process. Examples of the process include one in which the content of the fluoride ion in raw materials is reduced at the time of producing a fluorine-containing organic metal salt, one in which hydrogen fluoride obtained by a reaction is removed by a gas generated at the time of the reaction or heating, and one in which the amount of the fluoride ion is reduced by purification means such as recrystallization and reprecipitation at the time of producing a fluorine-containing organic metal salt.

Since an organic metal salt-based flame retardant relatively easily dissolves in water, it is preferably produced by using ion exchange water, especially water having an electric resistance of not less than 18 MΩ·cm, that is, an electric conductivity of about not more than 0.55 µS/cm to dissolve and clean it at a temperature higher than normal temperature and then cooling it for recrystallization.

Examples of the alkali (earth) metal salt of an aromatic sulfonic acid include disodium diphenylsulfide-4,4'-disulfonate, dipotassium diphenylsulfide-4,4'-disulfonate, potassium 5-sulfoisophthalate, sodium 5-sulfoisophthalate, polysodium polyethylene terephthalate polysulfonate, calcium 1-methoxynaphthalene-4-sulfonate, disodium 4-dodecylphenylether disulfonate, polysodium poly(2,6-dimethylphenylene oxide)polysulfonate, polysodium poly(1,3-phenylene oxide)polysulfonate, polysodium poly(1,4-phenylene oxide)polysulfonate, polypotassium poly(2,6-diphenylphenylene oxide)polysulfonate, lithium poly(2-fluoro-6-butylphenylene oxide)polysulfonate, potassium sulfonate of benzenesulfonate, sodium benzenesulfonate, strontium benzenesulfonate, magnesium benzenesulfonate, dipotassium p-benzenedisulfonate, dipotassium naphthalene-2,6-disulfonate, calcium biphenyl-3,3'-disulfonate, sodium diphenylsulfone-3-sulfonate, potassium diphenylsulfone-3-sulfonate, dipotassium diphenylsulfone-3,3'-disulfonate, dipotassium diphenylsulfone-3,4'-disulfonate, sodium α,α,α-trifluoroacetophenone-4-sulfonate, dipotassium benzophenone-3,3'-disulfonate, disodium thiophene-2,5-disulfonate, dipotassium thiophene-2,5-disulfonate, calcium thiophene-2,5-disulfonate, sodium benzothiophenesulfonate, potassium diphenylsulfoxide-4-sulfonate, formalin condensate of sodium naphthalenesulfonate, and formalin condensate of sodium anthracenesulfonate.

Out of these alkali (earth) metal salts of an aromatic sulfonic acid, potassium salts are preferred. Out of these alkali (earth) metal salts of an aromatic sulfonic acid, potassium diphenylsulfone-3-sulfonate and dipotassium diphenylsulfone-3,3'-disulfonate are more preferred, and a mixture of these (the weight ratio of the former to the latter is 15/85 to 30/70) is particularly preferred.

Preferred organic metal salts other than the sulfonic acid alkali (earth) metal salts include alkali (earth) metal salts of a sulfuric acid ester and alkali (earth) metal salts of an aromatic sulfonamide.

The alkali (earth) metal salts of a sulfuric acid ester include alkali (earth) metal salts of a sulfuric acid ester of a monohydric and/or polyhydric alcohol. Examples of the sulfuric acid ester of a monohydric and/or polyhydric alcohol include methyl sulfuric acid esters, ethyl sulfuric acid esters, lauryl sulfuric acid esters, hexadecyl sulfuric acid esters, sulfuric acid esters of a polyoxyethylene alkylphenyl ether, mono-, di-, tri- and tetra-sulfuric acid esters of pentaerythritol, sulfuric acid esters of monoglyceride laurate, sulfuric acid esters of monoglyceride palmitate and sulfuric acid esters of monoglyceride stearate. Out of these alkali (earth) metal salts of a sulfuric acid ester, alkali (earth) metal salts of a lauryl sulfuric acid ester are preferred.

The alkali (earth) metal salts of an aromatic sulfonamide include alkali (earth) metal salts of saccharin, N-(p-tolylsulfonyl)-p-toluenesulfoimide, N-(N'-benzylaminocarbonyl)sulfanilimide and N-(phenylcarboxyl)sulfanilimide.

The content of the organic metal salt-based flame retardant is preferably 0.001 to 1 part by weight, more preferably 0.005 to 0.5 part by weight, much more preferably 0.01 to 0.3 part by weight, particularly preferably 0.03 to 0.15 part by weight based on 100 parts by weight of the total of the thermoplastic resin (A) and the reinforcing fibers (B).

### (ii) Organic phosphorus-based flame retardant

As the organic phosphorus-based flame retardant, an aryl phosphate compound and a phosphazene compound are preferably used. Since these organic phosphorus-based flame retardants have a plasticizing effect, they can improve moldability advantageously. Various phosphate compounds which have been known as flame retardants may be used as the aryl phosphate compound. One or more phosphate compounds represented by the following general formula [2] are more preferred.

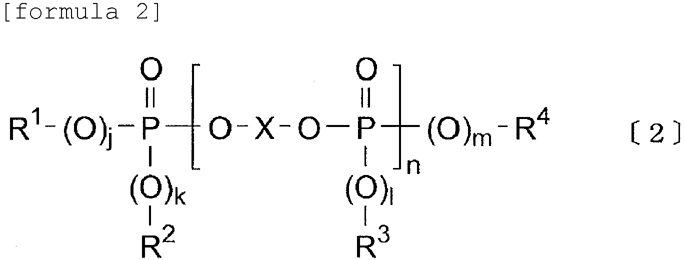

(In the above formula, X is a divalent organic group derived from a dihydric phenol, and R¹, R², R³ and R⁴ are each a monovalent organic group derived from a monohydric phenol. "j", "k", "l" and "m" are each independently 0 or 1, "n" is an integer of 0 to 5, and in the case of a mixture of phosphoric acid esters which differ in polymerization degree "n", "n" is an average value of 0 to 5.)

The phosphate compound of the above formula may be a mixture of compounds which differ in "n". In the case of a mixture, the average value "n" is preferably 0.5 to 1.5, more preferably 0.8 to 1.2, much more preferably 0.95 to 1.15, particularly preferably 1 to 1.14.

Preferred examples of the dihydric phenol inducing X include hydroquinone, resorcinol, bis(4-hydroxydiphenyl)methane, bisphenol A, dihydroxydiphenyl, dihydroxynaphthalene, bis(4-hydroxyphenyl)sulfone, bis(4-hydroxyphenyl)ketone and bis(4-hydroxyphenyl)sulfide. Out of these, resorcinol, bisphenol A and dihydroxydiphenyl are preferred.

Preferred examples of the monohydric phenol inducing R¹, R², R³ and R⁴ include phenol, cresol, xylenol, isopropyl phenol, butyl phenol and p-cumyl phenol. Out of these, phenol and 2,6-dimethyl phenol are preferred. The monohydric phenol may be substituted by a halogen atom. Examples of the phosphate compound having a group derived from the monohydric phenol include tris(2,4,6-tribromophenyl)phosphate, tris(2,4-dibromophenyl)phosphate and tris(4-bromophenyl) phosphate.

Preferred examples of the phosphate compound not substituted by a halogen atom include monophosphate compounds such as triphenyl phosphate and tri(2,6-xylyl)phosphate, phosphate oligomers containing resorcinol bisdi(2,6-xylyl)phosphate as the main component, phosphate oligomers containing 4,4-dihydroxydiphenyl bis(diphenylphosphate) as the main component, and phosphoric acid ester oligomers containing bisphenol A bis(diphenylphosphate) as the main component (the term "the main component" as used herein means that these oligomers may contain a small amount of another component which differs in polymerization degree, that is, the content of the compound of the above formula (1) in which "n" is 1 is preferably not less than 80 wt%, more preferably not less than 85 wt%, much more preferably not less than 90 wt%) .

As the phosphazene compound, various phosphazene compounds which have been known as flame retardants may be used but phosphazene compounds represented by the following general formulas [3] and [4] are preferred.

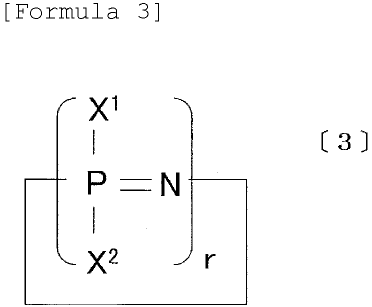

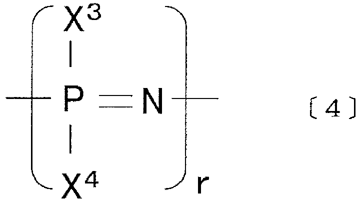

(In the above formulas, X¹, X², X³ and X⁴ are each independently a hydrogen atom, hydroxyl group, amino group or organic group containing no halogen atom. "r" is an integer of 3 to 10.)

In the above formulas [3] and [4], examples of the organic group containing no halogen atom represented by X¹, X², X³ and X⁴ include alkoxy group, phenyl group, amino group and allyl group. Cyclic phosphazene compounds represented by the above formula [3] are preferred, and cyclic phenoxy phosphazene of the above formula [3] in which X¹ and X² are phenoxy groups are particularly preferred. The content of the organic phosphorus-based flame retardant is preferably 1 to 50 parts by weight, more preferably 2 to 30 parts by weight, much more preferably 5 to 20 parts by weight based on 100 parts by weight of the total of the thermoplastic resin (A) and the reinforcing fibers (B). When the content of the organic phosphorus-based flame retardant is lower than 1 part by weight, a flame retarding effect is hardly obtained and when the content is higher than 50 parts by weight, the breakage of a strand or surging occurs at the time of kneading and extruding, thereby reducing productivity.

### (iii) Silicone-based flame retardant

A silicone compound which is used as the silicone-based flame retardant improves flame retardancy through its chemical reaction at the time of combustion. Various compounds which have been proposed as flame retardants for aromatic polycarbonate resins may be used as the compound. It is considered that the silicone compound provides a high flame retarding effect especially to a polycarbonate resin by bonding itself or to a component derived from a resin at the time of combustion to form a structure or through a reduction reaction at the time of forming the structure.

Therefore, it is preferred that the silicone compound should contain a group which is highly active in the reaction, more specifically, a predetermined amount of at least one group selected from alkoxy group and hydrogen (that is, Si-H group). The content of the group (alkoxy group, Si-H group) is preferably 0.1 to 1.2 mol/100 g, more preferably 0.12 to 1 mol/100 g, much more preferably 0.15 to 0.6 mol/100 g. This content is obtained by measuring the amount of hydrogen or an alcohol generated per unit weight of the silicone compound by an alkali decomposition method. The alkoxy group is preferably an alkoxy group having 1 to 4 carbon atoms, particularly preferably methoxy group.

The structure of the silicone compound is generally constituted by combining the following four different siloxane units arbitrarily. That is, they are:
M units: monofunctional siloxane units such as (CH₃)₃SiO_{1/2}, H(CH₃)₂SiO_{1/2}, H₂(CH₃)SiO_{1/2}, (CH₃)₂(CH₂=CH)SiO_{1/2}, (CH₃)₂(C₆H₅)SiO_{1/2} and (CH₃)(C₆H₅)(CH₂=CH)SiO_{1/2}
D units: bifunctional siloxane units such as (CH₃)₂SiO, H(CH₃)SiO, H₂SiO, H(C₆H₅)SiO, (CH₃)(CH₂=CH)SiO and (C₆H₅)₂SiO
T units: trifunctional siloxane units such as (CH₃)SiO_{3/2}, (C₃H₇)SiO_{3/2}, HSiO_{3/2}, (CH₂=CH)SiO_{3/2} and (C₆H₅)SiO_{3/2}
Q unit: tetrafunctional siloxane unit represented by SiO₂

The structure of the silicone compound used as the silicone-based flame retardant is represented by Dn, Tp, MmDn, MmTp, MmQq, MmDnTp, MmDnQq, MmTpQq, MmDnTpQq, DnTp, DnQq or DnTpQq as rational formulae. Out of these, the structure of the silicone compound is represented by preferably MmDn, MmTp, MmDnTp or MmDnQq, more preferably MmDn or MmDnTp.

The coefficients "m", "n", "p" and "q" in the above rational formulae are each an integer of 1 or more, indicating the polymerization degree of each siloxane unit, and the total of these coefficients in the each rational formulae is the average polymerization degree of the silicone compound. The average polymerization degree is preferably 3 to 150, more preferably 3 to 80, much more preferably 3 to 60, particularly preferably 4 to 40. Within the more preferred range, higher flame retardancy is obtained. As will be described hereinafter, a silicone compound containing a predetermined amount of an aromatic group is also excellent in transparency and hue. As a result, good reflected light is obtained. When any one of "m", "n", "p" and "q" is 2 or more, two or more of the siloxane units having this coefficient differ in the hydrogen atom or organic residue bonded thereto.

The silicone compound may have a linear or branched structure. The organic residue bonded to the silicon atom has preferably 1 to 30 carbon atoms, more preferably 1 to 20 carbon atoms. Examples of the organic residue include alkyl groups such as methyl group, ethyl group, propyl group, butyl group, hexyl group and decyl group, cycloalkyl groups such as cyclohexyl group, aryl groups such as phenyl group, and aralkyl groups such as tolyl group. The organic residue is more preferably an alkyl group having 1 to 8 carbon atoms, alkenyl group or aryl group. The alkyl group is particularly preferably an alkyl group having 1 to 4 carbon atoms such as methyl group, ethyl group or propyl group.

Further, the silicone compound used as the silicone-based flame retardant preferably contains an aryl group. A silane compound and a siloxane compound as organic surface treating agents for a titanium dioxide pigment are clearly distinguished from the silicone-based flame retardant as a preferred effect is obtained when they do not contain an aryl group. The silicone compound used as the silicone-based flame retardant may contain a reactive group in addition to the above Si-H group and alkoxy group. Examples of the reactive group include amino group, carboxyl group, epoxy group, vinyl group, mercapto group and methacryloxy group.

The content of the silicone-based flame retardant is preferably 0.01 to 20 parts by weight, more preferably 0.5 to 10 parts by weight, much more preferably 1 to 5 parts by weight based on 100 parts by weight of the total of the thermoplastic resin (A) and the reinforcing fibers (B).

### (iv) Polytetrafluoroethylene having fibril forming ability (fibrillated PTFE)

The fibrillated PTFE may be fibrillated PTFE alone or a mixture of fibrillated PTFE, that is, a polytetrafluoroethylene-based mixture of fibrillated PTFE particles and an organic polymer. The fibrillated PTFE has an extremely high molecular weight and tends to become fibrous through the bonding of PTFE's by an external function such as shear force. The number average molecular weight thereof is 1,500,000 to several tens of million. The lower limit of the number average molecular weight is preferably 3,000,000. The number average molecular weight is calculated based on the melt viscosity of polytetrafluoroethylene at 380°C as disclosed by JP-A 6-145520. That is, the fibrillated PTFE as the component B has a melt viscosity at 380°C measured by the method disclosed by the above publication of 10⁷ to 10¹³ poise, preferably 10⁸ to 10¹² poise.

The PTFE in a solid form or an aqueous dispersion form may be used. A PTFE mixture of the fibrillated PTFE and another resin may also be used to improve dispersibility in a resin and further obtain high flame retardancy and mechanical properties.

As disclosed by JP-A 6-145520, a PTFE mixture containing the fibrillated PTFE as the core and low-molecular weight polytetrafluoroethylene as the shell is preferably used as well.

Commercially available products of the fibrillated PTFE include the TEFLON (registered trademark) 6J of Du Pont-Mitsui Fluorochemicals Co., Ltd. and the POLYFLON MPA FA500 and F-201L of Daikin Industries, Ltd.

The fibrillated PTFE mixture obtained by (1) a method in which a fibrillated PTFE aqueous dispersion and an aqueous dispersion or solution of an organic polymer are mixed together and co-precipitation is carried out to obtain a coaggregated mixture (disclosed by JP-A 60-258263 and JP-A 63-154744), (2) a method in which a fibrillated PTFE aqueous dispersion and dried organic polymer particles are mixed together (disclosed by JP-A 4-272957), (3) a method in which a fibrillated PTFE aqueous dispersion and an organic polymer particle solution are uniformly mixed together and their media are removed from the obtained mixture at the same time (disclosed by JP-A 06-220210 and JP-A 08-188653), (4) a method in which a monomer for forming an organic polymer is polymerized in a fibrillated PTFE aqueous dispersion (disclosed by JP-A 9-95583), or (5) a method in which a PTFE aqueous dispersion and an organic polymer dispersion are uniformly mixed together and further a vinyl-based monomer is polymerized in the mixed dispersion to obtain a mixture (disclosed by JP-A 11-29679) may be used.

Commercially available products of these fibrillated PTFE mixtures include the METABLEN A series such as METABLEN A3000 (trade name), METABLEN A3700 (trade name) and METABLEN A3800 (trade name) of Mitsubishi Rayon Co., Ltd., the SN3300B7 (trade name) of Shine Polymer Technology Co., Ltd., and the BLENDEX B449 (trade name) of GE Specialty Chemicals.

The content of the fibrillated PTFE in the mixture is preferably 1 to 95 wt%, more preferably 10 to 90 wt%, most preferably 20 to 80 wt% based on 100 wt% of the mixture. When the content of the fibrillated PTFE in the mixture falls within the above range, the high dispersibility of the fibrillated PTFE can be obtained. The content of the fibrillated PTFE is preferably 0.001 to 0.5 part by weight, more preferably 0.01 to 0.5 part by weight, much more preferably 0.1 to 0.5 part by weight based on 100 parts by weight of the total of the thermoplastic resin (A) and the reinforcing fibers (B).

### (IV) Dye and pigment

The laminate of the present invention can provide molded articles having various designs when it further comprises various dyes or pigments. Examples of the dye or pigment used in the present invention include perylene-based dyes, coumalin-based dyes, thioindigo-based dyes, anthraquinone-based dyes and thioxanthone-based dyes. Ferrocyanides such as Prussian blue, perinone-based dyes, quinoline-based dyes, quinacridone-based dyes, dioxazine-based dyes, isoindolinone-based dyes and phthalocyanine-based dyes are also included. When a polycarbonate resin is used as the thermoplastic resin (A) in the present invention, a good metallic color can be obtained by using a metallic pigment. The metallic pigment is preferably an aluminum powder. By blending a fluorescent brightener or a luminescent fluorescent dye other than the fluorescent brightener, a good design effect can be provided by making use of a luminescent color.

### (V) Fluorescent brightener

In the laminate of the present invention, the fluorescent brightener is not particularly limited if it is used to improve the color of a resin to white or blue-white color. Examples thereof include stilbene-based, benzimidazole-based, benzoxazole-based, naphthalimide-based, rhodamine-based, coumalin-based and oxazine-based compounds. More specifically, CI Fluorescent Brightener 219:1, the EASTOBRITE OB-1 of Eastman Chemical Company and the Hakkol PSR of Hakkol Chemical Co., Ltd. are such examples. The fluorescent brightener has the function of absorbing the energy of an ultraviolet part of light and applying this energy to a visible part. The content of the fluorescent brightener is preferably 0.001 to 0.1 part by weight, more preferably 0.001 to 0.05 part by weight based on 100 parts by weight of the total of the thermoplastic resin (A) and the reinforcing fibers (B). Even when the content is higher than 0.1 part by weight, the effect of improving the color of the composition is small.

### (VI) Compound having heat ray absorbability

The laminate of the present invention may comprise a compound having heat ray absorbability. Preferred examples of the compound include phthalocyanine-based near-infrared absorbents, metal compounds having excellent near infrared absorbability such as metal oxide-based near-infrared absorbents including ATO, ITO, iridium oxide, ruthenium oxide and immonium oxide, and metal boride-based and tungsten-based near-infrared absorbents including lanthanum boride, cerium boride and tungsten boride, and carbon fillers. As the phthalocyanine-based near-infrared absorbent, MIR-362 is commercially available from Mitsui Chemicals, Inc. and can be easily acquired. The carbon fillers include carbon black, graphite (including natural and artificial products) and fullerene, out of which carbon black and graphite are preferred. They may be used alone or in combination of two or more.

The content of the phthalocyanine-based near-infrared absorbent is preferably 0.0005 to 0.2 part by weight, more preferably 0.0008 to 0.1 part by weight, much more preferably 0.001 to 0.07 part by weight based on 100 parts by weight of the total of the thermoplastic resin (A) and the reinforcing fibers (B). The content of each of the metal oxide-based near-infrared absorbent, the metal boride-based near-infrared absorbent and the carbon filler in the laminate of the present invention is preferably 0.1 to 200 ppm (based on weight), more preferably 0.5 to 100 ppm.

### (VII) Light diffusing agent

A light diffusing effect can be provided when the fiber-reinforced resin composite finally obtained from the laminate of the present invention comprises a light diffing agent. Examples of the light diffusing agent include polymer fine particles, inorganic fine particles having a low refractive index such as calcium carbonate and composites thereof. The polymer fine particles are fine particles which are already known as a light diffusing agent for polycarbonate resins. Preferred examples thereof include acrylic crosslinked particles and silicone crosslinked particles typified by polyorganosilsesquioxane having a particle diameter of several µm. The shape of the light diffusing agent is spherical, disk-like, columnar or indeterminate. The spherical shape does not need to be perfectly spherical and includes a deformed shape, and the columnar shape includes a cubic shape. The light diffusing agent is preferably spherical and more preferably uniform in particle size.

The content of the light diffusing agent is preferably 0.005 to 20 parts by weight, more preferably 0.01 to 10 parts by weight, much more preferably 0.01 to 3 parts by weight based on 100 parts by weight of the total of the thermoplastic resin (A) and the reinforcing fibers (B). Two or more light diffusing agents may be used in combination.

### (VIII) Light high reflection white pigment

A light reflection effect can be provided to the fiber-reinforced resin composite finally obtained by mixing a light high reflection white pigment into the laminate of the present invention. As the white pigment, a titanium dioxide (especially titanium dioxide treated with an organic surface treating agent such as silicone) pigment is particularly preferred.

The content of the light high reflection white pigment is preferably 1 to 40 parts by weight, more preferably 3 to 30 parts by weight, much more preferably 8 to 25 parts by weight based on 100 parts by weight of the total of the thermoplastic resin (A) and the reinforcing fibers (B). Two or more light high reflection white pigments may be used in combination.

### (XI) Antistatic agent

Since there is a case where antistatic performance is required for the fiber-reinforced resin composite finally obtained from the laminate of the present invention, the composite preferably comprises an antistatic agent in this case.

Examples of the antistatic agent include (1) phosphonium salts of an organic sulfonic acid such as phosphonium salts of an arylsulfonic acid typified by phosphonium salts of dodecylbenzenesulfonic acid and phosphonium salts of an alkylsulfonic acid, and phosphonium salts of boric acid such as phosphonium salts of tetrafluoroboric acid.

The content of the phosphonium salt is suitably not more than 5 parts by weight, preferably 0.05 to 5 parts by weight, more preferably 1 to 3.5 parts by weight, much more preferably 1.5 to 3 parts by weight based on 100 parts by weight of the total of the thermoplastic resin (A) and the reinforcing fibers (B).

Other examples of the antistatic agent include (2) alkali (earth) metal salts of an organic sulfonic acid such as organic lithium sulfonates, organic sodium sulfonates, organic potassium sulfonates, organic cesium sulfonates, organic rubidium sulfonates, organic calcium sulfonates, organic magnesium sulfonates and organic barium sulfonates.

The metal salts are also used as flame retardants as described above. Specific examples of the metal salts include metal salts of dodecylbenzenesulfonic acid and metal salts of perfluoroalkanesulfonic acid.

The content of the alkali (earth) metal salt of an organic sulfonic acid is suitably not more than 0.5 part by weight, preferably 0.001 to 0.3 part by weight, more preferably 0.005 to 0.2 part by weight based on 100 parts by weight of the total of the thermoplastic resin (A) and the reinforcing fibers (B). Alkali metal salts such as potassium, cesium and rubidium salts are particularly preferred.

Still other examples of the antistatic agent include (3) ammonium salts of an organic sulfonic acid such as ammonium salts of an alkylsulfonic acid and ammonium salts of an arylsulfonic acid. The content of the ammonium salt is suitably not more than 0.05 part by weight based on 100 parts by weight of the total of the thermoplastic resin (A) and the reinforcing fibers (B).

Further examples of the antistatic agent include (4) polymers containing a poly(oxyalkylene)glycol component such as polyether ester amide as a constituent component. The content of the polymer is suitably not more than 5 parts by weight based on 100 parts by weight of the total of the thermoplastic resin (A) and the reinforcing fibers (B).

### (X) Others

The laminate of the present invention may comprise a flowability modifier, antibacterial agent, dispersant such as liquid paraffin, photocatalyst-based antifouling agent and photochromic agent. In order to improve the physical properties of the fiber-reinforced resin composite finally obtained from the laminate of the present invention, it is preferred to add an impact resistance modifier to the thermoplastic resin (A) of the laminate.

### (hollow fibers)

The laminate of the present invention includes the reinforcing fiber sheet (b) and the thermoplastic resin sheet (a), and the thermoplastic resin sheet (a) is preferably such that the above additives are contained in the thermoplastic resin (A) to meet various requirements. The thermoplastic resin sheet (a) is a nonwoven fabric containing hollow fibers. More specifically, the thermoplastic resin sheet (a) is a nonwoven fabric containing hollow fibers which are arranged in a reticulate form.

The thermoplastic resin sheet (a) is molten and arranged around the reinforcing fibers (B) without a space therebetween and becomes a fiber-reinforced resin composite in the end. At this point, since the thermoplastic resin sheet (a) is a nonwoven fabric containing hollow fibers in the present invention, a soft laminate is obtained. Therefore, when the laminate is heated and pressed to produce a fiber-reinforced resin composite, the thermoplastic resin (A) easily conforms to a mold or the reinforcing fibers (B), thereby making it possible to ensure high physical properties for the fiber-reinforced resin composite obtained by molding. The term "hollow" means not only that the fiber has clear voids like a known hollow fiber but also that the fiber has bubbles therein.

In the present invention, since the thermoplastic resin sheet (a) is obtained as a nonwoven fabric containing hollow fibers, high adhesion to the reinforcing fibers (B) can be obtained as compared with an ordinary nonwoven fabric containing no hollow fibers.

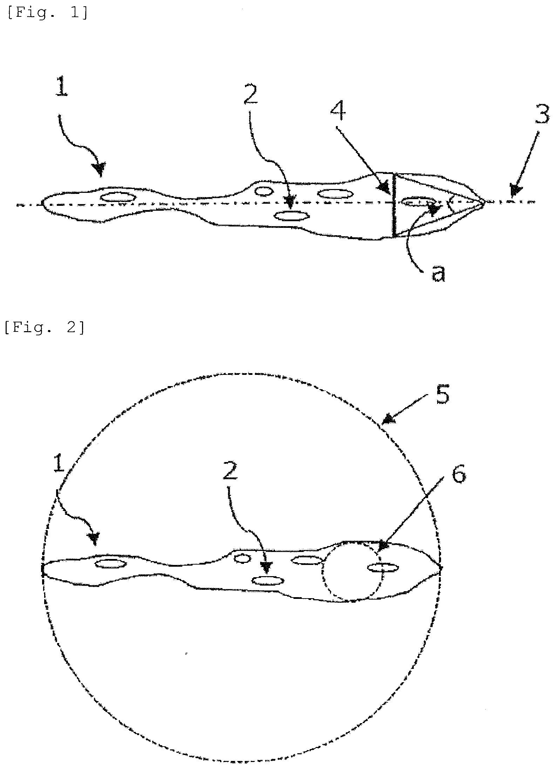

Further, to obtain high adhesion to the reinforcing fibers (B), a modified cross section hollow fiber having an irregular noncircular cross section is preferred. The hollow fiber has bubbles therein and is fibrous having discontinuous bubbles therein and preferably an irregular noncircular cross section as schematically shown in Fig. 1 and Fig. 2. Stated more specifically, it is preferably a flat fibrous material having a plurality of bubbles therein which differ in shape as defined in claim 1.

The bubbles in the modified cross section fiber are closed spaces (voids) existent in the fiber. In general, voids in a synthetic fiber have the same cross section and are continuous in a fiber axial direction as seen in a hollow fiber. Unlike this, the voids in the present invention have a discontinuous bubble-like form. In the present invention, it is preferred that the hollow fiber should have the above discontinuous bubbles therein which have different cross-sectional forms in the lengthwise direction of the fiber.

Since there exist preferred discontinuous bubble-like voids in the present invention, unlike ordinary continuous voids, the flowability of the thermoplastic resin can be uniformly improved. As a result, as compared with continuous voids, excellent impregnability can be developed at the time of compounding the reinforcing fibers.

The hollow fiber has bubbles therein as described above and preferably has a hollowness on the cross section of a single fiber of 0.5 to 40 %. The term "hollowness" means the percentage of the total area of all the bubbles to the cross section of the fiber when a plurality of bubbles are contained in the cross section of the fiber. Further, the hollowness of the fiber is preferably 1 to 30 %, more preferably 2 to 5 %. When the hollowness of the fiber is lower than 1 %, impregnability may become unsatisfactory at the time of compounding the reinforcing fibers and when the hollowness is higher than 30 %, the strength of the nonwoven fabric deteriorates and also fiber shredding often occurs in a fiber production step such as spinning in the case of a modified cross section fiber, thereby reducing production efficiency.

This hollowness is obtained as the ratio of the total area of hollow parts to the entire cross-sectional area including the hollow parts of the fiber from a fiber cross section photo of an image obtained by a scanning electron microscope (SEM) at a magnification of 100. In the present invention, due to the existence of the hollow parts, the wall part of the cross section of the fiber becomes thin and easily melts, thereby improving particularly the moldability of a fine part. However, when the hollowness of the fiber becomes too high, the heat conductivity of the entire hollow fiber becomes small, thereby tending to reduce molding efficiency.

The size of each bubble is preferably in the range of 0.1 to 100 µm. The size is particularly preferably in the range of 0.5 to 50 µm. When the size of the bubble is smaller than 0.1 µm, impregnability may become unsatisfactory at the time of compounding the reinforcing fibers (B) and when the size is larger than 100 µm, not only the compounding of the reinforcing fibers (B) does not become uniform but also defects (bubbles) may remain in the fiber-reinforced resin composite disadvantageously.

In the present invention, a modified cross section fiber is preferably used but the irregular noncircular cross section at the periphery of the modified cross section fiber which has a shape disorder is more preferred than a regular cross section such as ellipse or regular polygon. Since the cross section of an ordinary synthetic fiber depends on the shape of a spinneret, it is generally a regular cross section. This is because the incidence of broken yarn at the time of melt spinning becomes high with an irregular spinneret shape. However, when the modified cross section is regular, another fiber is filled in the modified cross-sectional part of the fiber to be closely packed at the time of constituting a nonwoven fabric, thereby reducing the number of voids. Unlike the above fiber, preferably, the reticulate fiber of the present invention has a modified cross section whose shape does not depend on the shape of a spinneret. The hollow fiber is preferably a modified cross section fiber obtained by slit spinning using a foaming agent.

Since the hollow fiber has an irregular outer cross section and a reticulate form, a void is always formed in an overlapped part of the modified cross section fibers and voids between fibers take various forms. The voids between fibers do not become uniform and the number of overlapped parts of the fibers becomes small. Further, bending rigidity and the density of a material become random due to this irregular form. As a result, uniform mechanical properties are obtained by compounding the reinforcing fibers as bending rigidity and density become random.

The end face angle of the hollow fiber is smaller than 60°, preferably 1 to 55°, more preferably 3 to 45°. This end face angle is obtained from a fiber cross section photo of an image obtained by a scanning electron microscope (SEM) at a magnification of 100, and the angle of a triangle long-axis end part formed by setting a straight line (short axis) on the thickest part in a direction orthogonal to a straight line (long axis) connecting both ends of the cross section of the fiber and connecting the both ends of the short axis and the end part of the long axis close to the short axis is taken as the end face angle. When the end face angle is small, the hollow fiber made of the thermoplastic resin easily enters spaces between the reinforcing fibers, thereby making it possible to ensure high impregnability.

The modified cross section fiber which is preferably used in the present invention preferably has a modification degree of more than 1 to not more than 20 on the cross section of a single fiber. The modification degree is more preferably 2 to 10. The modification degree of the cross section of the fiber is defined as the D1/D2 ratio of the diameter D1 of the circumscribed circle to the diameter D2 of the inscribed circle of the cross section of the single fiber. When this modification degree falls within the above preferred range, excellent impregnability can be developed at the time of compounding the reinforcing fibers. Stated more specifically, this modification degree is obtained from a fiber cross section photo of an image obtained by a scanning electron microscope (SEM) at a magnification of 100 like the measurement of the above hollowness and calculated as the D1/D2 ratio by measuring the diameter D1 of the circumscribed circle to the diameter D2 of the inscribed circle of the cross section of the single fiber. Contrary to the end face angle, when the value of the modification degree is large, the hollow fiber made of the thermoplastic resin (A) easily enters spaces between the reinforcing fibers (B), thereby making it possible to ensure higher impregnability.

The thermoplastic resin sheet (a) is a nonwoven fabric containing hollow fibers and the hollow fibers themselves preferably have a modified cross section. Therefore, the hollow fibers are preferably synthetic fibers whose form is easily controlled. As the thermoplastic resin (A) constituting the synthetic fibers, the above components can be used. A thermoplastic resin composition comprising at least one thermoplastic resin (A) having a melting point of 70 to 350°C and a stabilizer is preferred.

The nonwoven fabric containing the hollow fibers can be obtained by blowing air or a high-pressure gas such as nitrogen at the time of spinning melt blow fibers to produce hollow fibers and collecting the melt blow fibers on a mesh screen to make them nonwoven. Also, the nonwoven fabric can be obtained by blowing a high-pressure gas at the time of extruding the molten thermoplastic resin (A) from a die and collecting hollow fibers having bubbles therein. The shape of the die may be circular, angular or slit-like.

The melt blow fibers are made of the above thermoplastic resin (A) and collected on the mesh screen to be made nonwoven. The melt blow fibers are accumulated on a capturing face on the mesh scree uniformly in a plane form at a high density to become the thermoplastic resin sheet (a).

The nonwoven fabric composed of the melt blow fibers becomes a reticulate long-fiber nonwoven fabric in which the melt blow fibers are arranged two-dimensionally unlike a short-fiber nonwoven fabric obtained by entangling short fibers three-dimensionally by an ordinary needle punching method. This nonwoven fabric becomes a sheet having high strength and excellent followability to a mold when it is formed into a laminate though it has low entangling density. The melt blow nonwoven fabric composed of long fibers is preferably used in the present invention and has an advantage that it easily becomes a high-density nonwoven fabric as the long fibers are scarcely arranged in the thickness direction.

Since the melt blow fibers which become reticulate hollow fibers by a high-pressure air stream are composed of undrawn fibers which are rarely drawn, they become the thermoplastic resin sheet (a) having excellent workability, and a laminate obtained by laminating the sheet has excellent workability as well. The reticulate hollow fibers contain a large number of unoriented parts and are softened at a relatively low temperature. Therefore, when the hollow fibers are heated and pressed (molded) at a temperature not higher than the melting temperature of the reinforcing fibers (B), unoriented parts of the reticulate hollow fibers are softened and bonded together to develop excellent moldability though they do not contain a binder component.

The fiber diameter of the hollow fiber is preferably not smaller than 10 µm, more preferably 10 to 25 µm as an average value, particularly preferably 12 to 15 µm. This fiber diameter can be easily measured from an image obtained by a microscope. Although a melt blow fiber having smaller fineness is generally used, the melt blow fiber having a fiber diameter of this range is preferably used to obtain a laminate having excellent followability to a mold and excellent moldability at the time of heating in the present invention. The fiber diameter of this melt blow fiber can be adjusted by the nozzle diameter of a spinneret and the throughout range.

A detailed description is subsequently given of a method of making the melt blow fiber which is most suitable as the hollow fiber used in the present invention. The melt blow fiber is a fiber obtained, for example, by ejecting a high-speed hot air stream right below the nozzle of a spinneret while melt spinning the thermoplastic resin (A) to make a fine fiber.

As the thermoplastic resin (A) constituting the melt blow fiber, the thermoplastic resin (A) which was described previously can be used, as exemplified by polymers such as polyester, polyamide, polyvinyl alcohol, polycarbonate, polyphenylene sulfide and polypropylene. Further, a mixture of two or more thermoplastic resins may be used if it has fiber forming property. A polycarbonate resin is preferred as the thermoplastic resin (A).

The thermoplastic resin (A) constituting the thermoplastic resin sheet (a) preferably contains the above functional incompatible components. By using the incompatible components, various characteristic properties can be provided to the laminate of the present invention and to the fiber-reinforced resin composite obtained by molding the laminate. An ordinary spinning step has a problem that a process failure such as yarn break readily occurs when the incompatible components are added in large quantities. The thermoplastic resin sheet (a) which is a nonwoven fabric containing hollow fibers is used in the present invention, and the process condition becomes excellent by using the nonwoven fabric composed of melt blow fibers.

The nonwoven fabric composed of melt blow fibers which are preferably used in the present invention can be obtained, for example, by collecting the melt blow fibers made of the above thermoplastic resin (A) on a mesh screen. Since this melt blow nonwoven fabric is formed uniformly on a capturing face on the mesh screen uniformly in a plane form at a high density, it becomes suitable as the thermoplastic resin sheet (a) for laminates.

Since the nonwoven fabric composed of melt blow fibers is a long fiber nonwoven fabric having high orientation in two-dimensional directions unlike a short fiber nonwoven fabric in which fibers are entangled three-dimensionally by an ordinary needle punching method, it can achieve required strength in a planar direction though it has relative low entangling density. The melt blow nonwoven fabric composed of long fibers tends to become a high-density nonwoven fabric as the fibers are scarcely arranged in the thickness direction, whereby it has excellent resin impregnability in nature.

Preferably, the melt blow fibers preferably used in the present invention become a nonwoven fabric by a high-pressure air stream and are composed of undrawn fibers which are rarely drawn. Therefore, since the nonwoven fabric contains a large number of unoriented parts which are softened at a relatively low temperature, a no-binder type nonwoven fabric in which unoriented parts are softened and bonded is easily obtained by embossing at a temperature not lower than glass transition temperature though it does not contain a binder component.

### (lamination method)

The laminate of the present invention can be produced by joining together the above thermoplastic resin sheet (a) which is the above nonwoven fabric containing hollow fibers and the reinforcing fiber sheet (b) and pressing them to integrate them into one unit. Pressing is carried out to such an extent that the hollowness of the hollow fibers does not change. The pressure for pressing is preferably 1 to 30 MPa, more preferably 1 to 20 MPa, much more preferably 5 to 20 MPa. The time for pressing is preferably 0.1 to 120 seconds, more preferably 0.1 to 60 seconds, much more preferably 0.1 to 30 seconds. The temperature for pressing is preferably 10 to 100°C, more preferably 10 to 80°C, much more preferably 10 to 60°C.

The weight ratio of the thermoplastic resin sheet (a) and the reinforcing fiber sheet (b) is preferably 90:10 to 30:70, more preferably 70:30 to 40:60.

The thermoplastic resin sheet (a) has a thickness measured under a load of 1.25 N/cm² by using the peacock of a probe having a diameter of 8 mm of preferably 0.05 to 0.5 mm, more preferably 0.1 to 0.3 mm and a weight of preferably 2 to 100 g/m². Preferably, the reinforcing fiber sheet (b) has a thickness of 0.05 to 1.0 mm and a weight of 100 to 2,000 g/m².

Preferably, the laminate of the present invention is produced by joining together a plurality of the thin thermoplastic resin sheets (a) and a plurality of the reinforcing fiber sheets (b) alternately, and a thermoplastic resin sheet (a) is arranged on the outermost front and rear surfaces.

The laminate of the present invention is a material having high flexibility and excellent followability to a mold.

### <fiber-reinforced resin composite (FRTP composite)>

A fiber-reinforced resin composite can be produced by pressing the above laminate at a temperature not lower than the melting temperature of the thermoplastic resin (A) and lower than the melting temperature of the reinforcing fibers (B). The thermoplastic resin (A) is molten by heating and pressing to surround the reinforcing fibers (B). To improve the physical properties of the fiber-reinforced resin composite, voids are preferably not existent.

The temperature for pressing which depends on the thermoplastic resin (A) in use is preferably 200 to 340°C, more preferably 240 to 330°C. The processing time is preferably about 1 to 30 minutes, more preferably about 1 to 10 minutes, particularly preferably 3 to 10 minutes. The pressure at the time of pressing is preferably 2 to 30 MPa, more preferably 5 to 20 MPa.

The fiber-reinforced resin composite is a composite in which the thermoplastic resin (A) as a matrix resin is arranged around the reinforcing fibers (B) without a space therebetween though the ratio of the reinforcing fibers (B) is high. Since the thermoplastic resin (A) is a nonwoven fabric containing hollow fibers at the beginning, the mutual position between it and the reinforcing fibers (B) becomes appropriate.

### EXAMPLES

The following examples are provided for the purpose of further illustrating the present invention but are in no way to be taken as limiting. Measurement items in the examples were measured by the following methods.

### (I) Evaluation of thermoplastic resin sheet (a) (I-1) weight

### This was measured in accordance with JIS L 1913. (1-2) end face angle

The cross section of a fiber was observed through a scanning electron microscope (SEM, JSM-6100 of JEOL Ltd.) at a magnification of 100, and the obtained photo was digitized. The angle of a triangle long-axis end part formed by setting a straight line (short axis) on the thickest part in a direction orthogonal to a straight line (long axis) connecting both ends of the cross section of the fiber and connecting the both ends of the short axis and the end part of the long axis close to the short axis is taken as the end face angle. The end face angle is expressed as the average value of the end face angles of 20 fibers (Fig. 1).

### (1-3) modification degree

In the digitized photo obtained by the measurement of the above end face angle, the ratio (D₁/D₂) of the diameter D₁ of the circumscribed circle 5 to the diameter D₂ of the inscribed circle 5 of the cross section of the fiber was calculated as the modification degree. The modification degree is expressed as the average value of the end face angles of 20 fibers (Fig. 2).

### (1-4) hollowness

The cross-sectional area (including hollow parts) and the total area of the hollow parts of the fiber were measured from the digitized photo obtained by the measurement of the above end face angle by using an image analyzing system and Pias-2 (manufactured by Pias Corporation) to calculate the hollowness (%) from the area ratio. The hollowness is expressed as the average value of the hollowness's of 20 fibers.

### (II) Evaluation of fiber-reinforced resin composite (FRTP composite)

### (II-1) number of voids

The cross section of each of the FRTP composites obtained in Examples and Comparative Examples was observed through a scanning electron microscope (SEM, JSM-6100 of JEOL Ltd.) at a magnification of 100 to evaluate the number of voids by the number of bubbles in the cross section. Bubbles which are larger than the reinforcing fiber diameter are counted and, when the number is 3 or less, the impregnability into the reinforcing fibers (B) of the thermoplastic resin (A) is judged as satisfactory.

### (II-2) flexural modulus

A sample having a length of 80 mm and a width of 10 mm was cut out from each of the FRTP composites obtained in Examples and Comparative Examples to measure its flexural modulus in accordance with ISO178 (measurement conditions: test speed of 2 mm/min, test temperature of 23°C).

### (II-3) bending strength

A sample having a length of 80 mm and a width of 10 mm was cut out from each of the FRTP composites obtained in Examples and Comparative Examples to measure its bending strength in accordance with ISO178 (measurement conditions: test speed of 2 mm/min, test temperature of 23°C).

### (II-4) flame retardancy

A test sample for the evaluation of UL-94 flame retardancy was cut out from each of the FRTP composites obtained in Examples and Comparative Examples to evaluate its flame retardancy. When the test sample does not meet V-0, V-1 and V-2 standards, it is designated as "notV".

### [used components]

The following components were used in Examples.

### (thermoplastic resin (A))

A-1:
   Polycarbonate resin obtained from 2,2-bis(4-hydroxyphenyl)propane as a monomer component, MVR (300°C, load of 1.2 kg) of 19 cm³/10 min, melting temperature of 250°C
A-2:
   Polycarbonate resin obtained from 2,2-bis(4-hydroxyphenyl)propane as a monomer component, MVR (300°C, load of 1.2 kg) of 8.5 cm³/10 min, melting temperature of 250°C
A-3:
   Copolycarbonate resin obtained from 2,2-bis(4-hydroxyphenyl)propane as a monomer component and a polydiorganosiloxane compound represented by the following formula [5] (average number "p" of repetitions in the formula of about 37)), MVR (300°C, load of 1.2 kg) of 5.5 cm³/10 min, content of polydiorganosiloxane component of 8.2 %, melting temperature of 240°C 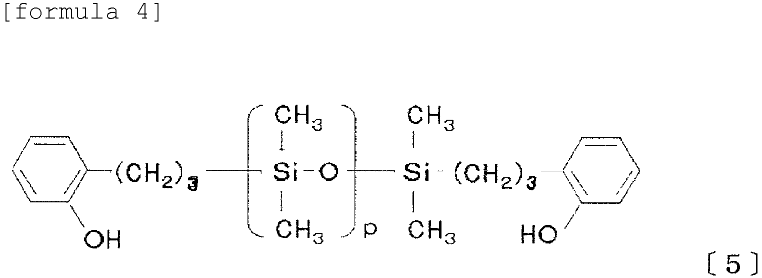
A-4:
   Polycarbonate resin having a branched structure obtained from 2,2-bis(4-hydroxyphenyl)propane as a monomer component and 1,1,1-tris(4-hydroxyphenyl)ethane which is a trifunctional phenol, MVR (300°C, load of 1.2 kg) of 6 cm³/10 min, amount of trifunctional phenol of 1 mol%, melting temperature of 250°C
A-5:
   Homopolypropylene resin, PRIME POLYPRO J105G of Prime Polymer Co., Ltd., MFR (230°C, load of 2.16 kg) of 9.5 g/10 min, melting point: 160°C
A-6:
   ABS resin, SUNTAC UT61 of Nippon A&L Inc., MVR (220°C, load of 10 kg) of 35 cm³/10 min, melting temperature of 150°C
A-7:
   Nylon resin, NOVAMID 1020 of DMS Inc., melting point of 220°C
A-8:
   Polyphenylene sulfide resin, melting point of 290°C
A-9:
   Polyethylene terephthalate resin, TRN-MTJ of Teijin Limited, melting point of 256°C
A-10:
   Polybutylene terephthalate resin, DURANEX 202FX of Polyplastics Co., Ltd., melting point of 223°C
A-11:
   Polyethylene naphthalate resin, TEONEX TN-8065S of Teijin Limited, MVR (300°C, load of 1.2 kg) of 5 cm³/10 min, melting point of 262°C
A-12: Liquid crystal polymer, melting point of 275 to 285°C

### (reinforcing fiber (B))

B-1:
   Carbon fiber unidirectional tape, F-22 of Toho Tenax Co., Ltd., fiber diameter of 7 µm, melting temperature of not lower than 350°C (does not melt at 350°C)
B-2:
   Carbon fiber woven fabric, W3101 of Toho Tenax Co., Ltd., weight of 200 g/m², thickness of 0.25 mm, fiber diameter of 7 µm, melting temperature of not lower than 350°C (does not melt at 350°C)
B-3:
   Nickel coated carbon fiber, HTS40 MC of Toho Tenax Co., Ltd., fiber diameter of 7.5 µm, melting temperature of not lower than 350°C (does not melt at 350°C)
B-4:
   Glass fiber woven fabric, WF150 of Nitto Boseki Co., Ltd., weight of 144 g/m², thickness of 0.22 mm, fiber diameter of 13 µm, melting temperature of not lower than 350°C (does not melt at 350°C)
B-5:
   Aramid fiber nonwoven fabric, TECHNORA EF200 of Teijin Limited, weight of 200 g/m², fiber diameter of 12 µm, melting temperature of not lower than 350°C (does not melt at 350°C)
B-6:
   Glass wool, WR1000 of MAG-ISOVER K.K., weight of 1,000 g/m², fiber diameter of 3 µm, melting temperature of not lower than 350°C (does not melt at 350°C)
B-7:
   Stainless fiber woven fabric, NASLON A type of Nippon Seisen Co., Ltd., weight of 715 g/m², thickness of 0.39 mm, melting temperature of not lower than 350°C (does not melt at 350°C)

### (flame retardant (C))

C-1:
   Resorcinol bis(dixylenyl phosphate), PX-200 of Daihachi Chemical Industry Co., Ltd.
C-2:
   Cyclic phenoxy phosphazene, FP-110T of Fushimi Pharmaceutical Co., Ltd.
C-3:
   Potassium salt of perfluorobutanesulfonic acid, MEGAFAC F-114P of Dainippon Ink and Chemicals, Inc.

### (other components)(incompatible components)

D-1:
   Polytetrafluoroethylene having fibril forming ability, POLYFURON MPA FA500 of Daikin Industries, Ltd.
D-2:
   Core-shell graft copolymer, METABLEN W-450 of Mitsubishi Rayon Co., Ltd.
D-3:
   Styrene·ethylene·propylene-styrene block copolymer, SEPTON 2104 of Kuraray Co., Ltd.
D-4:
   Polytetrafluoroethylene resin, RUBLON L-5 of Daikin Industries, Ltd.
D-5:
   Titanium dioxide, WHITE DCF-T-17007 of Resino Color Industry Co., Ltd.
D-6:
   Carbon black, RB-961S of ECCA Co., Ltd.
D-7:
   Polyolefin-based release agent, HIWAX 405MP of Mitsui Chemicals, Inc.
D-8:
   Saturated fatty acid ester-based release agent, RIKEMAL SL900 of Riken Vitamin Co., Ltd.
D-9:
   Bisphenol A type phenoxy resin, jER1256 of Mitsubishi Chemical Corporation
D-10:
   Acid modified olefin wax which is a copolymer of maleic anhydride and α-olefin, DIACARNA DC30M of Mitsubishi Chemical Corporation
D-11:
   Benzotriazole-based ultraviolet absorbent, TINUVIN 234 of BASF Japan
D-12:
   Stearyl 3-(3,5-di-tert-butyl-4-hydroxyphenyl)propionate, Irganox 1076 of BASF Japan
D-13:
   Trimethyl phosphate, TMP of Daihachi Chemical Industry Co., Ltd.
D-14:
   Tris(2,4-di-tert-butylphenyl)phosphite, Irgafos 168 of BASF Japan

### Production Examples 1 to 27 (nonwoven fabrics containing hollow fibers)

Compositions containing a thermoplastic resin shown in Tables 1 to 6 were each dried at 80°C for 5 hours by a hot air circulation drier, a nitrogen gas as a foaming agent was melt mixed with the compositions (nitrogen inclusion pressure of 3 MPa), and the resulting mixtures were each extruded from a double-screw extruder at an extrusion temperature shown in Tables 1 to 6 and taken off at a spinning speed shown in Tables 1 to 6 while they were quenched at the outlet of a slit die to wind thermoplastic resin sheets (a) which were nonwoven fabrics containing hollow fibers. The evaluation results of these sheets are shown in Tables 1 to 6.

### [Table 1]

**Table 1**

| | | Production Example 1 | Production Example 2 | Production Example 3 | Production Example 4 |
|---|---|---|---|---|---|
| Thermoplastic resin | | A-1 (PC) | A-2 (PC) | A-3 (coPC) | A-4 (branched PC) |
| Sheet production conditions | Extrusion temperature °C | 300 | 310 | 310 | 310 |
| | Spinning speed m/min | 20 | 20 | 17 | 22.4 |
| Physical properties of sheet | Weight g/m² | 13.5 | 14.9 | 17.3 | 13 |
| | End face angle ° | 27.4 | 21.0 | 17.5 | 23.1 |
| | Modification degree - | 4.1 | 5.4 | 6.5 | 4.9 |
| | Hollowness % | 15 | 18 | 24 | 22 |

### [Table 2]

**Table 1-continued**

| | | Production Example 5 | Production Example 6 | Production Example 7 | Production Example 8 |
|---|---|---|---|---|---|
| Thermoplastic resin | | A-5 (PP) | A-6 (ABS) | A-7 (PA) | A-8 (PPS) |
| Sheet production conditions | Extrusion temperature °C | 250 | 250 | 280 | 320 |
| | Spinning speed m/min | 50 | 40 | 25 | 18 |
| Physical properties of sheet | Weight g/m² | 3.7 | 5.5 | 10.7 | 18.5 |
| | End face angle ° | 29.5 | 38.1 | 48.9 | 50.9 |
| | Modification degree - | 3.8 | 2.9 | 2.2 | 2.1 |
| | Hollowness % | 12 | 19 | 10 | 15 |

### [Table 3]

**Table 2**

| | | Production Example 9 | Production Example 10 | Production Example 11 | Production Example 12 | Production Example 13 |
|---|---|---|---|---|---|---|
| Thermoplastic resin | Thermoplastic resin 1 (number of parts) | A-2(PC) (50 parts) | A-2(PC) (50 parts) | A-2(PC) (50 parts) | A-2(PC) (50 parts) | A-2(PC) (80 parts) |
| | Thermoplastic resin 2 (number of parts) | A-5(PP) (50 parts) | A-9(PET) (50 parts) | A-10(PBT) (50 parts) | A-11(PEN) (50 parts) | A-12(LCP) (20 parts) |
| Sheet production conditions | Extrusion temperature °C | 280 | 310 | 310 | 320 | 320 |
| | Spinning speed m/min | 35 | 25 | 30 | 28 | 15 |
| Physical properties of sheet | Weight g/m² | 6.9 | 12 | 9.8 | 10.6 | 21.9 |
| | End face angle ° | 28.1 | 39.3 | 36.9 | 38.1 | 34.7 |
| | Modification degree - | 4 | 2.8 | 3 | 2.9 | 3.2 |
| | Hollowness % | 14 | 17 | 18 | 14 | 16 |

### [Table 4]

**Table 3**

| | | Production Example 14 | Production Example 15 | Production Example 16 | Production Example 17 |
|---|---|---|---|---|---|
| Thermoplastic resin | Thermoplastic resin 1 (number of parts) | A-1(PC) (100 parts) | A-2(PC) (91 parts) | A-2(PC) (91 parts) | A-2(PC) (100 parts) |
| | Thermoplastic resin 2 (number of parts) | - | A-3(coPC) (9 parts) | A-3(coPC) (9 parts) | |
| | Flame retardant (number of parts) | C-1 (15 parts) | C-2 (18 parts) | C-2 (18 parts) | C-3 (0.07 part) |
| | Incompatible component 1 (number of parts) | D-1 (1 part) | D-1 (0.9 part) | - | D-1 (0.9 part) |
| | Incompatible component 2 (number of parts) | D-7 (1 part) | D-7 (1 part) | D-7 (1 part) | D-8 (1 part) |
| | Incompatible component 3 (number of parts) | | D-9 (4.8 parts) | D-9 (4.8 parts) | |
| | Incompatible component 4 (number of parts) | D-13 (0.05 part) | D-13 (0.05 part) | D-13 (0.05 part) | D-13 (0.05 part) |
| Sheet production conditions | Extrusion temperature °C | 300 | 320 | 320 | 320 |
| | Spinning speed m/min | 17 | 5 | 5 | 10 |
| Physical properties of sheet | Weight g/m² | 18.2 | 84 | 86 | 33.2 |
| | End face angle ° | 26.8 | 19.6 | 22.6 | 28.8 |
| | Modification degree - | 4.2 | 5.8 | 5 | 3.9 |
| | Hollowness % | 17 | 21 | 20 | 25 |

### [Table 5]

**Table 4**

| | | Production Example 18 | Production Example 19 | Production Example 20 |
|---|---|---|---|---|
| Thermoplastic resin | Thermoplastic resin 1 (number of parts) | A-2(PC) (70 parts) | A-1(PC) (70 parts) | A-1(PC) (100 parts) |
| | Thermoplastic resin 2 (number of parts) | A-6(ABS) (30 parts) | A-3(coPC) (30 parts) | A-3(coPC) (9 parts) |
| | Flame retardant (number of parts) | C-1 (15 parts) | C-3 (0.07 part) | |
| | Incompatible component 1 (number of parts) | D-1 (1 part) | | |
| | Incompatible component 2 (number of parts) | D-8 (1 part) | D-7 (1 part) | D-8 (1 part) |
| | Incompatible component 3 (number of parts) | | D-9 (3 parts) | D-11 (1 part) |
| Sheet production conditions | Extrusion temperature °C | 290 | 310 | 320 |
| | Spinning speed m/min | 30 | 15 | 22 |
| Physical properties of sheet | Weight g/m² | 8.7 | 20.6 | 13.1 |
| | End face angle ° | 30.2 | 21.8 | 26.2 |
| | Modification degree - | 3.7 | 5.2 | 4.3 |
| | Hollowness % | 17 | 22 | 17 |

### [Table 6]

**Table 5**

| | | Production Example 21 | Production Example 22 | Production Example 23 | Production Example 24 |
|---|---|---|---|---|---|
| Thermoplastic resin | Thermoplastic resin 1 (number of parts) | A-2(PC) (100 parts) | A-2(PC) (100 parts) | A-2(PC) (70 parts) | A-2(PC) (100 parts) |
| | Thermoplastic resin 2 (number of parts) | | - | A-3(coPC) (30 parts) | |
| | Flame retardant (number of parts) | C-1 (20 parts) | C-1 (20 parts) | | |
| | Incompatible component 1 (number of parts) | D-1 (1 part) | D-1 (1 part) | D-2 (8 parts) | |
| | Incompatible component 2 (number of parts) | D-5 (10 parts) | D-6 (1 part) | D-7 (1 part) | D-4 (10 parts) |
| | Incompatible component 3 (number of parts) | | - | D-12 (0.1 part) | |
| | Incompatible component 4 (number of parts) | | | D-14 (0.1 part) | D-14 (0.1 part) |
| Sheet production conditions | Extrusion temperature °C | 300 | 300 | 310 | 310 |
| | Spinning speed m/min | 7 | 21 | 18 | 10 |
| Physical properties of sheet | Weight g/m² | 54.9 | 13.9 | 16.6 | 34.5 |
| | End face angle ° | 28.1 | 26.2 | 22.2 | 25.6 |
| | Modification degree | 4 | 4.3 | 5.1 | 4.4 |
| | Hollowness % | 20 | 17 | 26 | 20 |

### [Table 7]

**Table 6**

| | | Production Example 25 | Production Example 26 | Production Example 27 |
|---|---|---|---|---|
| Thermoplastic resin | Thermoplastic resin 1 (number of parts) | A-6(ABS) (90 parts) | A-6(ABS) (100 parts) | A-8(PPS) (50 parts) |
| | Thermoplastic resin 2 (number of parts) | A-2(PC) (10 parts) | - | A-3(coPC) (50 parts) |
| | Flame retardant (number of parts) | - | - | C-3 (0.03 part) |
| | Incompatible component 1 (number of parts) | D-3 (5 parts) | | |
| | Incompatible component 2 (number of parts) | D-12 (0.1 part) | D-10 (3 parts) | |
| Sheet production conditions | Extrusion temperature °C | 260 | 250 | 320 |
| | Spinning speed m/min | 52 | 30 | 20 |
| Physical properties of sheet | Weight g/m² | 3.8 | 7.2 | 15.5 |
| | End face angle ° | 38.1 | 40.6 | 38.1 |
| | Modification degree | 2.9 | 2.7 | 2.9 |
| | Hollowness % | 16 | 13 | 17 |

### Production Examples 28 to 32 (nonwoven fabrics containing non-hollow fibers)

Compositions containing a thermoplastic resin shown in Table 7 were each dried at 80°C for 5 hours by a hot air circulation drier, extruded from a double-screw extruder at an extrusion temperature shown in Table 7 without using a nitrogen gas as a foaming agent and taken off at a take-off speed shown in Table 7 while they were quenched at the outlet of a slit die to wind nonwoven fabric sheets. These sheets were nonwoven fabric sheets containing solid fibers which are not hollow fibers. The evaluation results of these sheets are shown in Table 7.

### [Table 8]

**Table 7**

| | | Production Example 28 | Production Example 29 | Production Example 30 | Production Example 31 | Production Example 32 |
|---|---|---|---|---|---|---|
| Thermoplastic resin | Production example of the same composition | Production Example 2 | Production Example 5 | Production Example 9 | Production Example 15 | Production Example 20 |
| | Thermoplastic resin 1 (number of parts) | A-2(PC) (100 parts) | A-5(PP) (100 parts) | A-2(PC) (50 parts) | A-2(PC) (91 parts) | A-1(PC) (100 parts) |
| | Thermoplastic resin 2 (number of parts) | - | - | A-9(PET) (50 parts) | A-3(coPC) (9 parts) | |
| Sheet production conditions | Extrusion temperature °C | 310 | 250 | 310 | 320 | 320 |
| | Spinning speed m/min | 20 | 50 | 25 | 5 | 22 |
| Physical properties of sheet | Weight g/m² | 120 | 90 | 130 | 122 | 120 |
| | End face angle ° | <0.1 | <0.1 | <0.1 | <0.1 | <0.1 |
| | Modification degree - | <100 | <100 | <100 | <100 | <100 |
| | Hollowness % | 0 | 0 | 0 | 0 | 0 |

### Production Examples 33 to 36 (nonwoven fabrics containing short fibers)

Compositions containing a thermoplastic resin shown in Table 8 were each dried at 80°C for 5 hours by a hot air circulation drier and extruded from a double-screw extruder at an extrusion temperature shown in Table 8 to obtain filaments having a diameter of 30 µm which were then crimped and cut to 51 mm, and 60 wt% of the obtained fibers were mixed by a hopper feeder and passed through a carding step to produce fiber webs in which the fibers were aligned in one direction. Each of the webs was laminated at a crossing angle of 45° by a cross-layer method to obtain a nonwoven fabric. The evaluation results of the obtained fabrics are shown in Table 8.

### [Table 9]

**Table 8**

| | | Production Example 33* | Production Example 34* | Production Example 35* | Production Example 36* |
|---|---|---|---|---|---|
| Thermoplastic resin | Production example of the same composition | Production Example 2 | Production Example 9 | Production Example 15 | Production Example 20 |
| | Thermoplastic resin 1 (number of parts) | A-2(PC) (100 parts) | A-2(PC) (50 parts) | A-2(PC) (91 parts) | A-1(PC) (100 parts) |
| | Thermoplastic resin 2 (number of parts) | - | A-9(PET) (50 parts) | A-3(coPC) (9 parts) | |
| Sheet production conditions | Extrusion temperature °C | 310 | 310 | 320 | 320 |
| | Spinning speed m/min | - | no spinning | no spinning | - |
| Physical properties of sheet | Weight g/m² | 30 | - | - | 30 |
| | End face angle ° | 90 | - | - | 90 |
| | Modification degree - | 1 | - | - | 1 |
| | Hollowness % | 0 | - | - | 0 |

| | | | | | |
|---|---|---|---|---|---|
| * not according to the invention | | | | | |

### Examples 1 to 4

### (laminate)

The thermoplastic resin sheet (a) obtained in Production Example 1 and the reinforcing fiber sheet (b) were laminated together to ensure that the content of the fibers (Vf, wt%) became a value shown in Table 9 and pressed at normal temperature and 15 MPa for 10 seconds to obtain the laminates of Examples 1 to 4. At the time of lamination, care was taken to prevent the reinforcing fiber sheet (b) from leaning toward one side.

### (fiber-reinforced resin composite)

The obtained laminate was inserted into a preheated hot press and pressed at a temperature of 300°C and a pressure of 15 MPa for 5 minutes as shown in Table 9 to obtain a fiber-reinforced resin composite (FRTP composite). The amount of the thermoplastic resin sheet (a) and the amount of the reinforcing fiber sheet (b) were adjusted in advance to ensure that thickness of the fiber-reinforced resin composite became a target value after heating and pressing. The evaluation results of the finally obtained fiber-reinforced resin composites are shown in Table 9.

### [Table 10]

**Table 9**

| | | Ex. 1 | Ex. 2 | Ex. 3 | Ex. 4 |
|---|---|---|---|---|---|
| Thermoplastic resin sheet | Type | P.Ex.1 | P.Ex.1 | P.Ex.1 | P.Ex.1 |
| | Used resin | A-1 (PC) | A-1 (PC) | A-1 (PC) | A-1 (PC) |
| | Weight g/m² | 13.5 | 13.5 | 13.5 | 13.5 |
| Reinforcing fiber sheet | Type | B-1 | B-1 | B-1 | B-1 |
| | form | Unidirectional | Unidirectio -nal | Unidirectio -nal | Unidirectional |
| Vf of laminate wt% | | 50 | 25 | 35 | 55 |
| Process conditions | Temperature for pressing laminate °C | 300 | 300 | 300 | 300 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 2 | 0 | 0 | 3 |
| | Flexural modulus GPa | 35 | 18 | 25 | 39 |
| | Bending strength MPa | 350 | 200 | 260 | 380 |

| | | | | | |
|---|---|---|---|---|---|
| Ex.: Example P.Ex.: Production Example | | | | | |

### Examples 5 to 10

### (laminate)

The thermoplastic fiber sheet (a) obtained in Production Example 1 and the reinforcing fiber sheet (b) shown in Table 10 were laminated together to ensure that the content of the fibers (Vf, wt%) became a value shown in Table 10 and pressed at normal temperature and 15 MPa for 10 seconds to obtain laminates of Examples 5 to 10. At the time of lamination, care was taken to prevent the reinforcing fiber sheet (b) from leaning toward one side.

### (fiber-reinforced resin composite)

The obtained laminate was inserted into a preheated hot press and pressed at a temperature of 300°C and a pressure of 15 MPa for 5 minutes as shown in Table 10 to obtain a fiber-reinforced resin composite (FRTP composite). The amount of the thermoplastic resin sheet (a) and the amount of the reinforcing fiber sheet (b) were adjusted in advance to ensure that thickness of the fiber-reinforced resin composite became a target value after heating and pressing. The evaluation results of the finally obtained fiber-reinforced resin composite are shown in Table 10. The evaluation results of Example 1 are also shown in Table 10.

### [Table 11]

**Table 10**

| | | Ex. 1 | Ex. 5 | Ex. 6 | Ex. 7 |
|---|---|---|---|---|---|
| Thermoplastic resin sheet | Type | P.Ex.1 | P.Ex.1 | P.Ex.1 | P.Ex.1 |
| | Used resin | A-1 (PC) | A-1 (PC) | A-1 (PC) | A-1 (PC) |
| | Weight g/m² | 13.5 | 13.5 | 13.5 | 13.5 |
| Reinforcing fiber sheet | Type | B-1 | B-2 | B-3 | B-4 |
| | Form | Unidirectional carbon fibers | carbon fiber woven fabric | Unidirectio -nal metal coated carbon fibers | glass fiber woven fabric |
| Vf of laminate wt% | | 50 | 50 | 50 | 50 |
| Process conditions | Temperature for pressing laminate °C | 300 | 300 | 300 | 300 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 2 | 0 | 0 | 0 |
| | Flexural modulus GPa | 35 | 37 | 39 | 25 |
| | Bending strength MPa | 350 | 360 | 360 | 290 |

| | | | | | |
|---|---|---|---|---|---|
| Ex.: Example P.Ex.: Production Example | | | | | |

### [Table 12]

**Table 10-continued**

| | | Ex. 8 | Ex. 9 | Ex. 10 |
|---|---|---|---|---|
| Thermoplastic resin sheet | Type | P.Ex.1 | P.Ex.1 | P.Ex.1 |
| | Used resin | A-1 (PC) | A-1 (PC) | A-1 (PC) |
| | Weight g/m² | 13.5 | 13.5 | 13.5 |
| Reinforcing fiber sheet | Type | B-5 | B-6 | B-7 |
| | Form | Aramid nonwoven fabric | glass wool | metal fiber woven fabric |
| Vf of laminate wt% | | 50 | 50 | 40 |
| Process conditions | temperature for pressing laminate °C | 300 | 300 | 300 |
| | Time for pressing laminate min. | 5 | 5 | 5 |
| Fiber-reinforced resin composite | Thickness mm | 0.8 | 0.8 | 0.8 |
| | Number of voids | 1 | 1 | 0 |
| | Flexural modulus GPa | 15 | 20 | 40 |
| | Bending strength MPa | 290 | 210 | 420 |

| | | | | |
|---|---|---|---|---|
| Ex.: Example P.Ex.: Production Example | | | | |

### Examples 11 to 36, Comparative Examples 1 to 7 (laminate)

The thermoplastic fiber sheets (a) obtained in Production Examples 2 to 36 and the reinforcing fiber sheets (b) shown in Tables 11 to 17 were laminated together, respectively, to ensure that the contents of the fibers (Vf, wt%) became values shown in Tables 11 to 17 and pressed at normal temperature and 15 MPa for 10 seconds to obtain laminates of Examples 11 to 36 and laminates of Comparative Examples 1 to 7. At the time of lamination, care was taken to prevent the reinforcing fiber sheets (b) from leaning toward one side.

### (fiber-reinforced resin composite)

Each of the obtained laminates was inserted into a preheated hot press and pressed at a temperature shown in Tables and a pressure of 15 MPa for a time shown in Tables to obtain a fiber-reinforced resin composite (FRTP composite). The amount of the thermoplastic resin sheet (a) and the amount of the reinforcing fiber sheet (b) were adjusted in advance to ensure that thickness of the fiber-reinforced resin composite became a target value after heating and pressing. The evaluation results of the finally obtained fiber-reinforced resin composites are shown in Tables 11 to 17. The evaluation results of Example 5 are also shown in Table 11.

### [Table 13]

**Table 11**

| | | Ex. 5 | Ex. 11 | Ex. 12 | Ex. 13 |
|---|---|---|---|---|---|
| Thermoplastic resin sheet | Type | P.Ex.1 | P.Ex.2 | P.Ex.3 | P.Ex.4 |
| | Used resin | A-1 (PC) | A-2 (PC) | A-3 (coPC) | A-4 (branched PC) |
| | Weight g/m² | 13.5 | 14.9 | 17.3 | 13 |
| | End face angle ° | 27.4 | 21.0 | 17.5 | 23.1 |
| | Modification degree | 4.1 | 5.4 | 6.5 | 4.9 |
| | Hollowness % | 15 | 18 | 24 | 22 |
| Reinforcing fiber sheet | Type | B-2 | B-2 | B-2 | B-2 |
| | Form | Woven fabric | Woven fabric | Woven fabric | Woven fabric |
| Vf of laminate wt% | | 0.8 | 0.8 | 0.8 | 0.8 |
| Process conditions | Temperature for pressing laminate °C | 300 | 310 | 310 | 310 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 0 | 0 | 0 | 0 |
| | Flexural modulus GPa | 37 | 36 | 37 | 35 |
| | Bending strength MPa | 360 | 340 | 320 | 310 |

| | | | | | |
|---|---|---|---|---|---|
| Ex.: Example P.Ex.: Production Example | | | | | |

### [Table 14]

**Table 11-continued**

| | | Ex. 14 | Ex. 15 | Ex. 16 | Ex. 17 |
|---|---|---|---|---|---|
| Thermoplastic resin sheet | Type | P.Ex.5 | P.Ex.6 | P.Ex.7 | P.Ex.8 |
| | Used resin | A-5 (PP) | A-6 (ABS) | A-7 (PA) | A-8 (PPS) |
| | Weight g/m² | 3.7 | 5.5 | 10.7 | 18.5 |
| | End face angle ° | 29.5 | 38.1 | 48.9 | 50.9 |
| | Modification degree | 3.8 | 2.9 | 2.2 | 2.1 |
| | Hollowness % | 12 | 19 | 10 | 15 |
| Reinforcing fiber sheet | Type | B-2 | B-2 | B-2 | B-2 |
| | Form | Woven fabric | Woven fabric | Woven fabric | Woven fabric |
| Vf of laminate wt% | | 0.8 | 0.8 | 0.8 | 0.8 |
| Process conditions | Temperature for pressing laminate °C | 250 | 250 | 280 | 320 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 0 | 0 | 0 | 0 |
| | Flexural modulus GPa | 28 | 29 | 53 | 57 |
| | Bending strength MPa | 190 | 270 | 600 | 680 |

| | | | | | |
|---|---|---|---|---|---|
| Ex.: Example P.Ex.: Production Example | | | | | |

### [Table 15]

**Table 12**

| | | Ex. 18 | Ex. 19 | Ex. 20 |
|---|---|---|---|---|
| Thermoplastic resin sheet | Type | P.Ex.9 | P.Ex.10 | P.Ex.11 |
| | Used resin | A-2(PC)/A-5 (PP) | A-2(PC)/A-9(PET) | A-2(PC)/A-10(PBT) |
| | Weight g/m² | 6.9 | 12 | 9.8 |
| | End face angle ° | 28.1 | 39.3 | 36.9 |
| | Modification degree | 4 | 2.8 | 3 |
| | Hollowness % | 14 | 17 | 18 |
| Reinforcing fiber sheet | Type | B-2 | B-2 | B-2 |
| | Form | Woven fabric | Woven fabric | Woven fabric |
| Vf of laminate wt% | | 50 | 50 | 50 |
| Process conditions | Temperature for pressing laminate °C | 280 | 310 | 310 |
| | Time for pressing laminate min. | 5 | 5 | 5 |
| Fiber-reinforced resin composite | Thickness mm | 0.8 | 0.8 | 0.8 |
| | Number of voids | 0 | 0 | 0 |
| | Flexural modulus GPa | 34 | 33 | 36 |
| | Bending strength MPa | 330 | 300 | 320 |
| Ex.: Example P.Ex.: Production Example | | | | |

### [Table 15]-continued

**Table 12-continued**

| | | Ex. 21 | Ex. 22 |
|---|---|---|---|
| Thermoplastic resin sheet | Type | P.Ex.12 | P.Ex.13 |
| | Used resin | A-2 (PC)/A-11 (PEN) | A-2(PC)/A-12(LCP) |
| | Weight g/m² | 10.6 | 21.9 |
| | End face angle ° | 38.1 | 34.7 |
| | Modification degree | 2.9 | 3.2 |
| | Hollowness % | 14 | 16 |
| Reinforcing fiber sheet | Type | B-2 | B-2 |
| | Form | Woven fabric | Woven fabric |
| Vf of laminate wt% | | 50 | 50 |
| Process conditions | Temperature for pressing laminate °C | 320 | 320 |
| | Time for pressing laminate min. | 5 | 5 |
| Fiber-reinforced resin composite | Thickness mm | 0.8 | 0.8 |
| | Number of voids | 1 | 1 |
| | Flexural modulus GPa | 46 | 48 |
| | Bending strength MPa | 440 | 490 |
| Ex.: Example P.Ex.: Production Example | | | |

### [Table 16]

**Table 13**

| | | Ex. 23 | Ex. 24 | Ex. 25 | Ex. 26 |
|---|---|---|---|---|---|
| Thermoplastic resin sheet | Type | P.Ex.14 | P.Ex.15 | P.Ex.16 | P.Ex.17 |
| | Used resin | A-1(PC) | A-2(PC)/A-3(coPC) | A-2(PC)/A-3(coPC) | A-2(PC) |
| | Flame retardant | C-1 | C-2 | C-2 | C-3 |
| | Other | D-1 etc. | D-1 etc. | D-9 etc. | D-1 etc. |
| | Weight g/m² | 18.2 | 84 | 86 | 33.2 |
| | End face angle ° | 26.8 | 19.6 | 22.6 | 28.8 |
| | Modification degree | 4.2 | 5.8 | 5 | 3.9 |
| | Hollowness % | 17 | 21 | 20 | 25 |
| Reinforcing fiber sheet | Type | B-2 | B-2 | B-2 | B-2 |
| | Form | Woven fabric | Woven fabric | Woven fabric | Woven fabric |
| Vf of laminate wt% | | 50 | 50 | 50 | 50 |
| Process conditions | Temperature for pressing laminate °C | 250 | 250 | 280 | 320 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 0 | 0 | 0 | 0 |
| | Flexural modulus GPa | 41 | 55 | 52 | 45 |
| | Bending strength MPa | 520 | 680 | 670 | 410 |
| | Flame retardancy | V-0 | V-0 | V-0 | V-1 |

| | | | | | |
|---|---|---|---|---|---|
| Ex.: Example P.Ex.: Production Example | | | | | |

### [Table 17]

**Table 14**

| | | Ex. 27 | Ex. 28 | Ex. 29 |
|---|---|---|---|---|
| Thermoplastic resin sheet | Type | P.Ex.18 | P.Ex.19 | P.Ex.20 |
| | Used resin | A-2(PC)/A-6(ABS) | A-1(PC)/A-3(coPC) | A-1(PC)/A-3(coPC) |
| | Flame retardant | C-1 | C-3 | - |
| | Other | D-1 etc. | D-7 etc. | D-8 etc. |
| | Weight g/m² | 8.7 | 20.6 | 13.1 |
| | End face angle ° | 30.2 | 21.8 | 26.2 |
| | Modification degree | 3.7 | 5.2 | 4.3 |
| | Hollowness % | 17 | 22 | 17 |
| Reinforcing fiber sheet | Type | B-2 | B-2 | B-2 |
| | Form | Woven fabric | Woven fabric | Woven fabric |
| Vf of laminate wt% | | 50 | 50 | 50 |
| Process conditions | Temperature for pressing laminate °C | 290 | 310 | 320 |
| | Time for pressing laminate min. | 5 | 5 | 5 |
| Fiber-reinforced resin composite | Thickness mm | 0.8 | 0.8 | 0.8 |
| | Number of voids | 0 | 0 | 0 |
| | Flexural modulus GPa | 40 | 44 | 35 |
| | Bending strength MPa | 430 | 410 | 300 |
| | Flame retardancy | V-0 | V-2 | - |

| | | | | |
|---|---|---|---|---|
| Ex.: Example P.Ex.: Production Example | | | | |

### [Table 18]

**Table 15**

| | | Ex. 30 | Ex. 31 | Ex. 32 | Ex. 33 |
|---|---|---|---|---|---|
| Thermoplastic resin sheet | Type | P.Ex.21 | P.Ex.22 | P.Ex.23 | P.Ex.24 |
| | Used resin | A-2(PC) | A-2(PC) | A-2(PC)/A-3(coPC) | A-2(PC) |
| | Flame retardant | C-1 | C-1 | - | - |
| | Other | D-1 etc. | D-1 etc. | D-2 etc. | D-4 etc. |
| | Weight g/m² | 54.9 | 13.9 | 16.6 | 34.5 |
| | End face angle ° | 28.1 | 26.2 | 22.2 | 25.6 |
| | Modification degree | 4 | 4.3 | 5.1 | 4.4 |
| | Hollowness % | 20 | 17 | 26 | 20 |
| Reinforcing fiber sheet | Type | B-2 | B-2 | B-2 | B-2 |
| | Form | Woven fabric | Woven fabric | Woven fabric | Woven fabric |
| Vf of laminate wt% | | 50 | 50 | 50 | 50 |
| Process conditions | Temperature for pressing laminate °C | 300 | 300 | 310 | 310 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 0 | 0 | 0 | 1 |
| | Flexural modulus GPa | 43 | 40 | 31 | 35 |
| | Bending strength MPa | 510 | 490 | 300 | 330 |
| | Flame retardancy | V-0 | V-0 | - | - |

| | | | | | |
|---|---|---|---|---|---|
| Ex.: Example P.Ex.: Production Example | | | | | |

### [Table 19]

**Table 16**

| | | Ex. 34 | Ex. 35 | Ex. 36 |
|---|---|---|---|---|
| Thermoplastic resin sheet | Type | P.Ex.25 | P.Ex.26 | P.Ex.27 |
| | Used resin | A-6 (ABS) /A-2 (PC) | A-6(ABS) | A - 3(coPC) A- |
| | Flame retardant | - | - | C-3 |
| | Other | D-3 etc. | D-10 | - |
| | Weight g/m² | 3.8 | 7.2 | 15.5 |
| | End face angle ° | 38.1 | 40.6 | 38.1 |
| | Modification degree | 2.9 | 2.7 | 2.9 |
| | Hollowness % | 16 | 13 | 17 |
| Reinforcing fiber sheet | Type | B-2 | B-2 | B-2 |
| | Form | Woven fabric | Woven fabric | Woven fabric |
| Vf of laminate wt% | | 50 | 50 | 50 |
| Process conditions | Temperature for pressing laminate °C | 260 | 250 | 320 |
| | Time for pressing laminate min. | 5 | 5 | 5 |
| Fiber-reinforced resin composite | Thickness mm | 0.8 | 0.8 | 0.8 |
| | Number of voids | 0 | 0 | 1 |
| | Flexural modulus GPa | 35 | 33 | 47 |
| | Bending strength MPa | 390 | 340 | 600 |
| | Flame retardancy | - | - | V-0 |

| | | | | |
|---|---|---|---|---|
| Ex.: Example P.Ex.: Production Example | | | | |

### [Table 20]

**Table 17**

| | | C.Ex. 1 | c.Ex. 2 | C.Ex. 3 | C.Ex. 4 |
|---|---|---|---|---|---|
| Thermoplastic resin sheet | Type | P.Ex.28 | P.Ex.29 | P.Ex.30 | P.Ex.31 |
| | Used resin | A-2(PC) | A-5 (PP) | A-2(PC)/A-9(PET) | A-2(PC)/A-3 (coPC) |
| | Weight g/m² | 120 | 90 | 130 | 122 |
| | End face angle ° | <0.1 | <0.1 | <0.1 | <0.1 |
| | Modification degree | <100 | <100 | <100 | <100 |
| | Hollowness % | 0 | 0 | 0 | 0 |
| Reinforcing fiber sheet | Type | B-2 | B-2 | B-2 | B-2 |
| | Form | Woven fabric | Woven fabric | Woven fabric | Woven fabric |
| Vf of laminate wt% | | 50 | 50 | 50 | 50 |
| Process conditions | Temperature for pressing laminate °C | 310 | 250 | 310 | 320 |
| | Time for pressing laminate min. | 5 | 5 | 5 | 5 |
| Fiber-reinforced resin composite | Thickness mm | 0.8 | 0.8 | 0.8 | 0.8 |
| | Number of voids | 17 | 9 | 14 | 7 |
| | Flexural modulus GPa | 24 | 18 | 28 | 21 |
| | Bending strength MPa | 200 | 160 | 250 | 270 |
| | Flame retardancy | - | - | - | V-1 |
| C.Ex.: Comparative Example P.Ex.: Production Example | | | | | |

### [Table 21]

**Table 17-continued**

| | | C.Ex. 5 | c.Ex. 6 | C.Ex. 7 |
|---|---|---|---|---|
| Thermoplastic resin sheet | Type | P.Ex.32 | P.Ex.33 | P.Ex.36 |
| | Used resin | A-1(PC) | A-2(PC) | A-1(PC) |
| | Weight g/m² | 120 | 54.9 | 34.5 |
| | End face angle ° | <0.1 | 28.1 | 25.6 |
| | Modification degree | <100 | 4 | 4.4 |
| | Hollowness % | 0 | 20 | 20 |
| Reinforcing fiber sheet | Type | B-2 | | |
| | Form | Woven fabric | Woven fabric | Woven fabric |
| Vf of laminate wt% | | 50 | 50 | 50 |
| Process conditions | Temperature for pressing laminate °C | 320 | 310 | 320 |
| | Time for pressing laminate min. | 5 | 5 | 5 |
| Fiber-reinforced resin composite | Thickness mm | 0.8 | 0.8 | 0.8 |
| | Number of voids | 15 | 6 | 5 |
| | Flexural modulus GPa | 17 | 29 | 22 |
| | Bending strength MPa | 120 | 310 | 190 |
| | Flame retardancy | - | - | - |
| C.Ex.: Comparative Example P.Ex.: Production Example | | | | |

### Explanation of reference numerals

- 1.: cross section of odd-shaped fiber
- 2.: bubble
- 3.: Long axis
- 4.: Short axis (thickest part)
- 5.: Circumscribed circle
- 6.: Inscribed circle
- a.: End face angle

## Claims

1. A laminate comprising a reinforcing fiber sheet (b) and a thermoplastic resin sheet (a), wherein
(i) the reinforcing fiber sheet (b) comprises reinforcing fibers (B) having a melting temperature of not lower than 350°C, and
(ii) the thermoplastic resin sheet (a) is a nonwoven fabric containing hollow fibers which comprise a thermoplastic resin (A) having a melting temperature of lower than 350°C,
wherein the thermoplastic resin sheet (a) is a nonwoven fabric containing hollow fibers which are arranged in a reticulate form,
wherein the end face angle of the hollow fiber is smaller than 60°,
wherein the hollow fiber has discontinuous bubbles therein.

2. The laminate according to claim 1, wherein the hollowness of the hollow fiber is not less than 5 %.

3. The laminate according to any one of claims 1 or 2, wherein the thermoplastic resin (A) comprises an amorphous resin as the main component.

4. The laminate according to any one of claims 1 to 3, wherein the thermoplastic resin (A) contains incompatible components.

5. The laminate according to claim 1, wherein the reinforcing fiber sheet (b) is a woven fabric, a knitted fabric, a nonwoven fabric or a unidirectional sheet.

6. The laminate according to any one of claims 1 to 5, wherein the content of the reinforcing fibers (B) is not lower than 10 wt%.

7. A process for producing a fiber-reinforced resin composite, comprising the steps of:
(i) providing the laminate of claim 1; and
(ii) pressing the laminate of claim 1 under heating.

8. The process according to claim 7, wherein the pressing of the laminate is conducted at a temperature not lower than the melting temperature of the thermoplastic resin (A) and lower than the melting temperature of the reinforcing fibers (B).

## Patentansprüche

1. Laminat, umfassend eine verstärkende Faserschicht (b) und eine thermoplastische Harzschicht (a), wobei
(i) die verstärkende Faserschicht (b) verstärkende Fasern (B) mit einer Schmelztemperatur von nicht weniger als 350°C umfasst, und
(ii) die thermoplastische Harzschicht (a) ein Vliesstoff ist, der Hohlfasern enthält, die ein thermoplastisches Harz (A) mit einer Schmelztemperatur von weniger als 350°C enthalten,
wobei die thermoplastische Harzschicht (a) ein Vliesstoff ist, der Hohlfasern enthält, die in Netzform angeordnet sind,
wobei der Endflächenwinkel der Hohlfaser kleiner als 60° ist,
wobei die Hohlfaser diskontinuierliche Blasen enthält.

2. Laminat nach Anspruch 1, wobei die Hohlheit der Hohlfaser nicht weniger als 5 % beträgt.

3. Laminat nach einem der Ansprüche 1 oder 2, wobei das thermoplastische Harz (A) ein amorphes Harz als Hauptkomponente enthält.

4. Laminat nach einem der Ansprüche 1 bis 3, wobei das thermoplastische Harz (A) unverträgliche Komponenten enthält.

5. Laminat nach Anspruch 1, wobei die verstärkende Faserschicht (b) ein Gewebe, ein Gewirke, ein Vlies oder eine unidirektionale Schicht ist.

6. Laminat nach einem der Ansprüche 1 bis 5, wobei der Gehalt der verstärkenden Fasern (B) nicht weniger als 10 Gew.-% beträgt.

7. Verfahren zur Herstellung eines faserverstärkten Harzkomposits, das die folgenden Schritte umfasst:
(i) Bereitstellung des Laminats nach Anspruch 1; und
(ii) Pressen des Laminats nach Anspruch 1 unter Erwärmung.

8. Verfahren nach Anspruch 7, wobei das Pressen des Laminats bei einer Temperatur durchgeführt wird, die nicht niedriger als die Schmelztemperatur des thermoplastischen Harzes (A) und niedriger als die Schmelztemperatur der verstärkenden Fasern (B) ist.

## Revendications

1. Stratifié comprenant une feuille de fibres de renforcement (b) et une feuille de résine thermoplastique (a), où
(i) la feuille de fibres de renforcement (b) comprend des fibres de renforcement (B) ayant une température de fusion non inférieure à 350°C, et
(ii) la feuille de résine thermoplastique (a) est un tissu non tissé contenant des fibres creuses qui comprennent une résine thermoplastique (A) ayant une température de fusion inférieure à 350°C,
dans lequel la feuille de résine thermoplastique (a) est un tissu non tissé contenant des fibres creuses qui sont disposées sous une forme réticulée,
dans lequel l'angle de la face terminale de la fibre creuse est inférieur à 60°,
dans laquelle la fibre creuse contient des bulles discontinues.

2. Stratifié selon la revendication 1, dans lequel le creux de la fibre creuse n'est pas inférieur à 5 %.

3. Stratifié selon l'une quelconque des revendications 1 ou 2, dans lequel la résine thermoplastique (A) comprend une résine amorphe comme composant principal.

4. Stratifié selon l'une quelconque des revendications 1 à 3, dans lequel la résine thermoplastique (A) contient des composants incompatibles.

5. Stratifié selon la revendication 1, dans lequel la feuille de fibres de renforcement (b) est une étoffe tissée, une étoffe tricotée, une étoffe non tissée ou une feuille unidirectionnelle.

6. Stratifié selon l'une quelconque des revendications 1 à 5, dans lequel la teneur en fibres de renforcement (B) n'est pas inférieure à 10 % en poids.

7. Procédé de production d'un composite de résine renforcé par des fibres, comprenant les étapes consistant à :
(i) fournir le stratifié de la revendication 1 ; et
(ii) presser le stratifié de la revendication 1 sous chauffage.

8. Procédé selon la revendication 7, dans lequel le pressage du stratifié est effectué à une température non inférieure à la température de fusion de la résine thermoplastique (A) et inférieure à la température de fusion des fibres de renforcement (B).
